# FASCICULE DE BREVET EUROPEEN

(11) **EP 2 228 274 B1**
(45) Date de publication et mention de la délivrance du brevet: **27.04.2016**
(21) Numéro de dépôt: 09306220.6
(22) Date de dépôt: 11.12.2009
(51) Int. Cl.: B60T 15/42

(54) **Dispositif d'aide au freinage de matériel ferroviaire roulant**
Bremsunterstützungsvorrichtung für Schienenfahrzeuge
Brake assisting system for railway vehicles

(30) Priorité: 11.12.2008 FR 0858464
(43) Date de publication de la demande: 15.09.2010
(73) Titulaire: KNORR-BREMSE SYSTEMES FERROVIAIRES FRANCE SA, 51100 Reims (FR)
(72) Inventeur: Mus, Yves, MONTRY, 77450 (FR)
(74) Mandataire: Michelet, Alain

(56) Documents cités:
- US-A- 4 875 739
- US-A- 5 429 427
- US-A- 5 564 794

## Description

La présente invention concerne un dispositif d'aide au freinage de matériel ferroviaire roulant.

Le transport ferroviaire, notamment en ce qui concerne les marchandises, met en oeuvre des trains de longueur importante et d'une masse significative. Dans ce type de train, le nombre de wagons est important et, en général, chacun de ces wagons comporte des freins. Le système de freinage d'un tel train comporte généralement une conduite d'air comprimé dite conduite générale, qui parcourt la longueur du train de wagon en wagon. La montée en pression dans la conduite générale permet de desserrer les freins et la baisse de la pression permet le serrage des freins. Ce principe assure une sécurité en cas de séparation accidentelle du train en plusieurs parties car la conduite générale est alors coupée et mise à l'air libre, ce qui provoque le serrage des freins. La commande de frein est disposée dans la cabine de conduite d'une motrice et l'action sur la commande de frein permet la mise en pression ou la vidange (mise à l'air libre) plus ou moins prononcée de la conduite générale. Si un tel système a fait ses preuves depuis un temps très long, il présente cependant des inconvénients. En particulier pour les trains longs, la propagation de la baisse de pression de la conduite générale le long du train n'est pas instantanée et les wagons les plus proches de la motrice sont donc freinés avant ceux qui en sont les plus éloignés. Il se produit alors des contraintes importantes à la fois sur les attelages entre les wagons et sur les freins des premiers wagons et de la motrice qui ont à ralentir les derniers wagons non encore freinés. Un tel système comprenant en outre un dispositif à soupape au fonctionnement rapide et continu est connu du brevet US 4,875,739.

La présente invention propose donc de résoudre des inconvénients de la technique traditionnelle en assurant, notamment, une action plus franche du freinage par une vidange accélérée de la conduite générale à l'air libre. Elle est mise en oeuvre dans un dispositif branché sur la conduite générale et qui peut être placé en toute position adéquate le long du train et, de préférence, à l'extrémité opposée à la motrice, c'est-à-dire en queue de train pour un train circulant motrice en tête. Le dispositif proposé est dans son coeur purement mécanique avec des actionneurs pneumatiques entraînés par des différences de pression et des clapets commandés mécaniquement et/ou de manière pneumatique. Dans une variante évoluée, il peut être combiné avec des moyens électroniques.

Ainsi, l'invention concerne un dispositif d'aide au freinage de matériel ferroviaire roulant, le freinage dudit matériel étant commandé par des variations à la baisse de pression d'air comprimé dans une conduite générale, le dispositif relié à ladite conduite générale comportant des moyens détecteurs et effecteurs ainsi que des circuits fluidiques entre lesdits moyens détecteurs et effecteurs, lesdits moyens détecteurs et effecteurs analysant les variations de pression dans ladite conduite et provoquant une mise en relation avec l'atmosphère de ladite conduite générale lors d'un freinage.

Selon l'invention, les moyens détecteurs et effecteurs du dispositif sont pneumo-mécaniques et les moyens détecteurs et effecteurs et les circuits fluidiques du dispositif sont configurés pour ne provoquer la mise en relation avec l'atmosphère de la conduite générale que pour une variation temporelle de pression supérieure à un seuil déterminé, ladite mise à l'atmosphère de la conduite générale ne durant que pendant une durée prédéterminée.

Dans divers modes de mise en oeuvre de l'invention, les moyens suivants pouvant être utilisés seuls ou selon toutes les combinaisons techniquement possibles, sont employés :
- la durée prédéterminée de mise à l'atmosphère de la conduite générale est obtenue par une fuite vers l'atmosphère d'air comprimé contenu dans une chambre de temporisation, ladite fuite s'ouvrant (la fuite étant alors active et présente) lorsque la conduite générale est mise en relation avec l'atmosphère, (lorsque la fuite n'est pas ouverte, il n'y a pas de fuite d'air proprement dit)
- la variation temporelle de pression supérieure à un seuil déterminé est détectée par un moyen permettant de créer une différence de débit entre deux circuits fluidiques d'air de conduite générale et en relation chacun avec une des deux faces d'un piston de commande,
- la durée prédéterminée de mise à l'atmosphère de la conduite générale est réglable,
- les moyens détecteurs et effecteurs et les circuits fluidiques du dispositif sont au moins un piston de commande dont la première face est dans une chambre de réaction CR et la seconde face dans une chambre de commande CC, le piston de commande pouvant se déplacer sous l'effet d'une différence de pression entre la chambre de réaction et la chambre de commande, un moyen de rappel élastique permettant de ramener ledit piston à une position de repos en l'absence de différence de pression,
   la chambre de commande CC étant reliée directement à la conduite générale et la chambre de réaction CR étant reliée directement à une chambre de temporisation CT, un circuit fluidique de dérivation en dérivation de la conduite générale étant établi avec la chambre de temporisation, ledit circuit fluidique de dérivation comportant sur son trajet au moins, d'une part, un clapet de dérivation C1 ou C1' ou C1" pouvant s'ouvrir ou se fermer en fonction d'une différence de pression entre ses deux faces et, d'autre part, une ouverture de dérivation O1 calibrée, ladite ouverture de dérivation O1 ne permettant qu'un passage réduit d'air,
   ledit circuit fluidique de dérivation étant configuré pour permettre l'équilibrage (en pratique une absence de déplacement du piston de commande) des pressions entre la chambre de réaction CR et la chambre de commande CC pour une variation temporelle de pression dans la conduite générale inférieure à un seuil déterminé, de préférence inférieure à 0,3 bar/min,
- les moyens détecteurs et effecteurs et les circuits fluidiques du dispositif sont au moins un piston de commande dont la première face est dans une chambre de réaction CR et la seconde face dans une chambre de commande CC, le piston de commande pouvant se déplacer sous l'effet d'une différence de pression entre la chambre de réaction et la chambre de commande, un moyen de rappel élastique permettant de ramener ledit piston à une position de repos en l'absence de différence de pression, le piston de commande permettant d'actionner en ouverture et fermeture un clapet de mise à l'atmosphère C2, un clapet d'isolement C3 et un clapet de fuite C4, une chambre de temporisation CT permettant de stocker de l'air comprimé et reliée au clapet de fuite C4 (reliée directement ou indirectement via la chambre de réaction), le clapet de fuite permettant de mettre en communication ou non la chambre de temporisation CT avec l'atmosphère par l'intermédiaire d'une ouverture O3 de fuite calibrée, ladite ouverture ne permettant qu'un passage réduit de l'air, un clapet de dérivation C1 pouvant s'ouvrir ou se fermer en fonction d'une différence de pression entre ses deux faces et comportant en parallèle une ouverture de dérivation O1 calibrée, ladite ouverture ne permettant qu'un passage réduit de l'air arrivant sur ledit clapet de dérivation, et la chambre de commande CC est reliée directement à la conduite générale et la chambre de réaction CR est reliée directement à la chambre de temporisation, un circuit fluidique de dérivation en dérivation de la conduite générale étant établi avec la chambre de temporisation, ledit circuit fluidique de dérivation comportant sur son trajet, le clapet de dérivation C1 avec son ouverture de dérivation O1 calibrée en parallèle et le clapet d'isolement C3, le clapet de mise à l'atmosphère C2 étant disposé en prise sur ledit circuit fluidique de dérivation entre le clapet de dérivation C1 et le clapet d'isolement C3, et en veille, une pression nominale d'air comprimé ayant été établie dans la conduite générale pendant un temps suffisant pour mettre en veille ledit dispositif, le piston étant à sa position de repos, la chambre de temporisation CT et la chambre de réaction CR étant à une pression sensiblement égale à celle de la conduite générale, le clapet de dérivation C1 est fermé, le clapet de mise à l'atmosphère C2 est fermé, le clapet d'isolement C3 est ouvert et le clapet de fuite C4 est fermé, et le dispositif comporte des moyens pour que lorsque à un temps t0 la pression dans la conduite générale baisse de telle manière qu'il se crée une différence de pression entre la chambre de réaction CR et chambre de commande CC du fait que la petitesse de l'ouverture O1 de dérivation du clapet de dérivation C1 ne permet pas le rééquilibrage des pressions entre les deux chambres, le piston de commande se déplace et entraîne, dans un premier temps t1, la fermeture du clapet d'isolement C3 (ce qui augmente encore la différence de pression entre les deux chambres et accélère le déplacement du piston) puis, dans un deuxième temps t2, l'ouverture du clapet de mise à l'atmosphère C2 (ce qui met le circuit fluidique de dérivation en communication avec l'air libre et qui fait que le clapet de dérivation C1 s'ouvre et assure ainsi une liaison directe entre l'air libre et la conduite générale selon un débit déterminé) puis, dans un troisième temps t3, l'ouverture du clapet de fuite C4 ce qui entraîne une vidange progressive de la chambre de temporisation CT et de la chambre de réaction CR, le rééquilibrage des pressions entre les deux chambres de réaction CR et de commande CC au bout d'un temps déterminé fonction de l'ouverture de fuite O3 calibrée ramenant le piston vers sa position de repos,
- le clapet de dérivation C1 comporte l'ouverture de dérivation 01, ladite ouverture de dérivation O1 traversant ledit clapet de dérivation C1,
- l'ouverture du clapet de mise à l'atmosphère C2 provoque une augmentation de la surface efficace du piston coté chambre de réaction,
- l'ouverture de fuite O3 est ajustable afin de pouvoir régler le délai de retour du piston vers sa position de repos,
- la durée de mise à l'air libre de la conduite générale est réglable,
- le circuit fluidique de dérivation ou la sortie à l'air libre du clapet de mise à l'atmosphère C2 comporte un orifice à étranglement O2 destiné à réduire le débit dans ledit circuit lors de la liaison directe entre l'air libre et la conduite générale résultant des ouvertures du clapet de mise à l'atmosphère C2 et du clapet de dérivation C1, (pour éviter le blocage des roues/l'enrayage)
- l'orifice à étranglement O2 est ajustable afin de pouvoir régler le débit maximal de l'air lors de la liaison directe entre l'air libre et la conduite générale résultant des ouvertures du clapet de mise à l'atmosphère C2 et du clapet de dérivation C1,
- la pression nominale d'air comprimé dans la conduite générale est d'environ 5 bars et l'ouverture de dérivation O1 du clapet de dérivation C1 est calibrée pour permettre l'équilibrage des pressions des chambre de réaction CR et chambre de commande CC (en fait, permettre qu'il n'y ait pas de déplacement du piston du fait que la différence de pression entre CC et CR reste trop faible) pour une variation de pression dans la conduite générale qui soit inférieure ou égale à environ 0,3 bar/min,
- l'ouverture de dérivation O1 est ajustable afin de pouvoir régler le seuil de détection d'un freinage,
- le seuil de différence de pression (dans le cas d'une variation rapide de pression telle qu'il n'y a pas de possibilité de rééquilibrage entre CC et CR par l'ouverture de dérivation O1) entre les deux faces du clapet entraînant l'ouverture du clapet de dérivation C1 est d'environ 0,1 bar,
- le seuil de différence de pression (dans le cas d'une variation rapide de pression telle qu'il n'y a pas de possibilité de rééquilibrage entre CC et CR par l'ouverture O1 de dérivation) entre les deux faces du clapet entraînant l'ouverture du clapet de dérivation C1 est ajustable,
- le délai entre le début du deuxième temps t2 d'ouverture du clapet de mise à l'atmosphère C2 et le début du troisième temps t3 d'ouverture du clapet de fuite C4 est réglable, en veille, piston au repos, le clapet de fuite C4 étant disposé à une distance Co ajustable d'un organe de poussée qui est destiné lorsqu'il est appuyé sur le clapet de fuite C4, à ouvrir ledit clapet de fuite, en fonctionnement la distance entre le clapet de fuite C4 et l'organe de poussée variant en relation avec les déplacements du piston de commande pour ouvrir ou fermer ledit clapet de fuite C4,
- t2 < t3, t2 étant supérieur à t1, (le clapet d'isolement C3 est fermé avant l'ouverture du clapet de mise à l'atmosphère C2)
- t3 < t2, t3 étant supérieur à t1, (le clapet d'isolement C3 est fermé avant l'ouverture du clapet de fuite C4)
- de préférence t2 est sensiblement égal à t3, l'ouverture du clapet de fuite C4 étant sensiblement simultané de l'ouverture du clapet de mise à l'atmosphère C2,
- le réglage du délai entre le début du deuxième temps t2 d'ouverture du clapet de mise à l'atmosphère C2 et le début du troisième temps t3 d'ouverture du clapet de fuite C4 s'effectue par vissage ou dévissage de l'organe de poussée,
- l'organe de poussée est un tube creux dans lequel à lieu la fuite à l'air libre de l'air contenu dans les chambres de temporisation CT et de réaction CR après ouverture du clapet de fuite C4,
- l'organe de poussée est immobile (en dehors de son réglage permettant de régler la distance Co entre le clapet de fuite C4 et l'organe de poussée) et le clapet de fuite C4 est solidaire du piston,
- l'ouverture du clapet de mise à l'atmosphère C2 ne peut avoir lieu qu'après la fermeture du clapet d'isolement C3, le clapet de mise à l'atmosphère C2 et le clapet d'isolement C3 étant actionnés par un organe d'actionnement commun lui même actionné par le piston, la fermeture du clapet d'isolement C3 formant une butée pour l'organe d'actionnement,
- le délai entre t0 et le premier temps t1 est réglable, en veille, piston au repos, le clapet d'isolement C3 ouvert ayant une hauteur d'ouverture de passage Ho ajustable, en fonctionnement la hauteur d'ouverture de passage variant en relation avec les déplacements du piston de commande pour ouvrir ou fermer ledit clapet d'isolement C3,
- le réglage du délai entre t0 et le premier temps t1 s'effectue par vissage ou dévissage de l'organe d'actionnement (le clapet de mise à l'atmosphère C2 et le clapet d'isolement C3 sont actionnés par un organe d'actionnement commun lui même actionné par le piston),
- l'organe d'actionnement est poussé par un ressort contre le piston (ou d'une manière identique dans le contexte fonctionnel de l'invention, contre un axe solidaire du piston comme dans l'exemple détaillé de mise en oeuvre),
- le clapet de mise à l'atmosphère C2 est disposé entre l'organe d'actionnement et le piston,
- les moyens détecteurs et effecteurs et les circuits fluidiques du dispositif sont au moins un piston de commande dont la première face est dans une chambre de réaction CR et la seconde face dans une chambre de commande CC, le piston de commande pouvant se déplacer sous l'effet d'une différence de pression entre la chambre de réaction et la chambre de commande, un moyen de rappel élastique permettant de ramener ledit piston à une position de repos en l'absence de différence de pression, le piston de commande permettant d'actionner en ouverture et fermeture un clapet de mise à l'atmosphère C2, un clapet d'isolement C3 et un clapet de fuite C4, une chambre de temporisation CT permettant de stocker de l'air comprimé étant reliée au clapet de fuite C4 (reliée directement ou indirectement via la chambre de réaction), le clapet de fuite permettant de mettre en communication ou non la chambre de temporisation CT avec l'atmosphère par l'intermédiaire d'une ouverture O3 de fuite calibrée, ladite ouverture ne permettant qu'un passage réduit de l'air, un clapet de dérivation C1' ou C1" pouvant s'ouvrir ou se fermer en fonction d'une différence de pression entre ses deux faces et comportant en série une ouverture de dérivation O1 calibrée, ladite ouverture ne permettant qu'un passage réduit de l'air arrivant sur ledit clapet de dérivation, et la chambre de commande CC est reliée directement à la conduite générale et la chambre de réaction CR est reliée directement à la chambre de temporisation, un circuit fluidique de dérivation en dérivation de la conduite générale étant établi avec la chambre de temporisation, ledit circuit fluidique de dérivation comportant sur son trajet le clapet de dérivation C1' ou C1" et l'ouverture de dérivation O1 calibrée, la conduite générale est reliée par un circuit fluidique A1' à la fois au clapet d'isolement C3 et au clapet de mise à l'atmosphère C2, et en veille, une pression nominale d'air comprimé ayant été établie dans la conduite générale pendant un temps suffisant pour mettre en veille ledit dispositif, le piston étant à sa position de repos, la chambre de temporisation CT et la chambre de réaction CR étant à une pression sensiblement égale à celle de la conduite générale, le clapet de dérivation C1' ou C1" est ouvert, le clapet de mise à l'atmosphère C2 est fermé, le clapet d'isolement C3 est fermé et le clapet de fuite C4 est fermé, et le dispositif comporte des moyens pour que lorsque à un temps t0 la pression dans la conduite générale baisse de telle manière qu'il se crée une différence de pression entre la chambre de réaction CR et chambre de commande CC du fait que la petitesse de l'ouverture O1 de dérivation ne permet pas le rééquilibrage des pressions entre les deux chambres, le piston de commande se déplace et entraîne, dans un premier temps t1, la continuation de la fermeture du clapet d'isolement C3 puis, dans un deuxième temps t2, l'ouverture du clapet de mise à l'atmosphère C2 puis, dans un troisième temps t3, l'ouverture du clapet de fuite C4 ce qui entraîne une vidange progressive de la chambre de temporisation CT et de la chambre de réaction CR, le rééquilibrage des pressions entre les deux chambres de réaction CR et de commande CC au bout d'un temps déterminé fonction de l'ouverture de fuite O3 calibrée ramenant le piston vers sa position de repos,
- le clapet de dérivation C1 ou C1' ou C1" pouvant s'ouvrir ou se fermer en fonction d'une différence de pression entre ses deux faces comporte un ressort R1 ou R1' ou R1" calibré pour ne permettre le déplacement du clapet que pour une variation de pression temporelle supérieure à 0,3 bar/min,
- le clapet de dérivation C1 "se ferme pour une pression dans la conduite générale inférieure ou égale à sensiblement 4,5 bars et reste fermé tant que la pression dans la conduite générale reste inférieure ou égale à sensiblement 4,5 bars,
- le circuit fluidique (dont notamment les parties A1 ou A1') permettant la mise à l'air libre de la conduite générale via le clapet de mise à l'atmosphère C2 comporte un orifice à étranglement O2 destiné à réduire le débit dans ledit circuit lors de la liaison directe entre l'air libre et la conduite générale,
- l'orifice à étranglement O2 est en sortie du dispositif,
- l'orifice à étranglement O2 est sur la partie A1 (entre C1 et CE/C2) ou A1' (entre ACG et CE/C2) du circuit fluidique permettant la mise à l'air libre de la conduite générale,
- le dispositif comporte en outre un circuit de contrôle et commande électronique et une électrovanne de mise à l'atmosphère de la conduite générale et au moins un capteur, ladite électrovanne étant normalement fermée, ledit au moins un capteur-étant un capteur de pression de la conduite générale, ledit circuit électronique comportant des moyens provoquant l'ouverture de l'électrovanne dans des conditions déterminées fonction de mesures du/des capteurs,
- le dispositif comporte en outre au moins un des capteurs suivants (capteurs mécaniques ou électroniques de type tout ou rien ou proportionnel analogique ou numérique selon le cas) :
   - un capteur de déplacement de piston actionnant un contacteur,
   - un capteur d'équilibre des pressions entre la chambre de réaction CR et la chambre de commande CC actionnant un contacteur,
   - un capteur de déséquilibre des pressions entre la chambre de réaction CR et la chambre de commande CC actionnant un contacteur,
- les capteurs d'équilibre ou de déséquilibre des pressions sont pneumo-mécaniques,
- les capteurs d'équilibre ou de déséquilibre des pressions sont électroniques,
- le circuit électronique est alimenté en électricité seulement lorsque qu'il y a déséquilibre de pression entre la chambre de réaction CR et la chambre de commande CC,
- le circuit électronique est alimenté en électricité seulement lorsque que le piston se déplace de sa position de repos,
- les conditions déterminées dans lesquelles les moyens du circuit électronique provoquent l'ouverture de l'électrovanne sont choisis parmi :
   - une défaillance de la partie mécanique du dispositif,
   - la mesure par le capteur de pression de la conduite générale d'une baisse de pression supérieure à un seuil déterminé (seuil absolu ou relatif et pour une variation (quasi) instantanée ou sur une période de temps donnée),
- le circuit de contrôle et commande électronique comporte en outre une entrée de commande directe d'ouverture et de fermeture de l'électrovanne de mise à l'atmosphère de la conduite générale,
- l'entrée de commande directe d'ouverture et de fermeture de l'électrovanne est reliée à un récepteur de télécommande de freinage, (permet d'activer par télécommande une vidange de la conduite générale à l'air libre par le dispositif sans attendre que la baisse de pression provoquée en tête de train se propage sur toute la longueur du train dans la conduite générale)
- la télécommande est radiofréquence,
- la télécommande est filaire,
- la télécommande est par fibre optique,
- le dispositif est dans un équipement de queue de train,
- l'équipement de queue de train est une lanterne,
- le circuit de contrôle et commande électronique comporte en outre un enregistreur électronique (mémoire informatique) de la pression de la conduite générale permettant le suivi et l'enregistrement au cours du temps des variations de pression dans la conduite générale,
- le circuit de contrôle et commande électronique comporte en outre un dispositif de positionnement global GPS et les informations de positionnement sont en outre enregistrées dans l'enregistreur électronique,
- au moins un des circuits fluidiques du dispositif comporte une purge, (notamment pour vider du liquide, l'air comprimé pouvant contenir de la vapeur d'eau qui peut se condenser)
- au moins une des chambres du dispositif comporte une purge,
- un filtre à poussières est disposé sur l'entrée conduite générale du dispositif,
- au moins un des moyens de réglage comporte un témoin de sécurité, (fil plombé par exemple),
- au moins un des moyens de réglage comporte un moyen de blocage positif, (double écrou, écrou auto serrant, vis, goupille...)
- le dispositif comporte un corps en métal,
- le dispositif comporte un corps en matière plastique,
- le corps du dispositif résulte de l'assemblage d'au moins deux parties,
- chaque partie du corps est obtenue par moulage,
- un usinage est effectué sur chaque partie moulée de corps.

L'invention concerne également un équipement de queue de train comportant un dispositif tel que décrit.

On comprend que le dispositif étant du type pneumo-mécanique, les temporisations crées peuvent avoir des durées qui peuvent éventuellement varier, faiblement, en fonction des conditions de fonctionnement qui peuvent parfois être extrêmes et, par exemple, de la vitesse importante de chute de la pression de la conduite générale ou d'une fréquence très élevée de répétition du freinage par un conducteur de train. En particulier, la notion de réglage des délais entraînant des temps d'actions différents est à considérer en premier lieu avec des mêmes conditions (initiales) de pression et/ou de variation de pression pour être significative dans l'absolu.

La présente invention, sans qu'elle en soit pour autant limitée, va maintenant être exemplifiée avec la description qui suit d'un mode de réalisation et en relation avec :
la Figure 1 qui représente un schéma de principe simplifié des circuits pneumo-mécaniques du coeur du dispositif de l'invention,
les Figures 2, 3 et 4 qui représentent un plan schématique en coupe d'un même exemple de mise en oeuvre concrète du dispositif de l'invention mais dans trois états fonctionnels,
la Figure 5 qui représente une coupe d'un dispositif selon l'invention,
la Figure 6 qui représente un schéma de principe simplifié des circuits pneumo-mécaniques du coeur d'une variante de réalisation du dispositif de l'invention,
la Figure 7 qui représente une première application de la variante de réalisation de la Figure 6, et
la Figure 8 qui représente une seconde application de la variante de réalisation de la Figure 6.

Le dispositif de l'invention, dans une version évoluée, comporte cinq parties distinctes. Tout d'abord, le coeur du dispositif, qui peut fonctionner seul dans une version simplifiée, correspond à la partie pneumatique ou pneumo-mécanique, ces termes étant ici équivalents. Les autres parties sont la partie électropneumatique (ou pneumo-électronique), la partie de commande à distance ou télécommande, la partie localisation par GPS et/ou GSM, la partie de signalisation lumineuse de type lanterne. Dans des versions plus ou moins évoluées, certaines de ces autres parties peuvent être omises. Toutefois, notamment dans le cas où une télécommande est prévue, au moins la partie électropneumatique doit être (en totalité ou non) associée du fait de la nécessité de la présence d'une électrovanne de mise à l'air libre de la conduite générale.

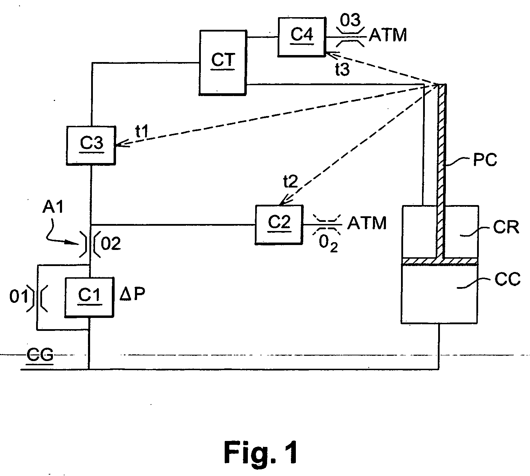

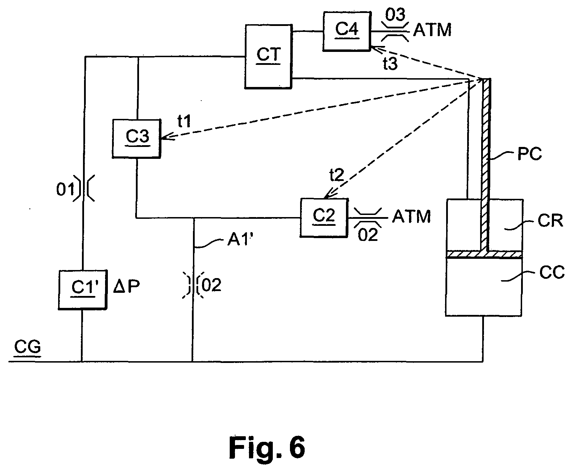

Le coeur pneumo-mécanique du dispositif est schématisé sur la Figure 1. Le coeur du dispositif comporte trois clapets à commande mécanique, un clapet de mise à l'atmosphère C2, un clapet d'isolement C3 et un clapet de fuite C4 actionnés par les mouvements d'un piston de commande PC qui peut se déplacer sous l'effet d'une différence de pression entre ses deux faces en correspondance respectivement avec une chambre de commande CC et une chambre de réaction CR. La commande mécanique par le piston des trois clapets de mise à l'atmosphère C2, d'isolement C3 et de fuite C4 en cas de freinage est décalée dans le temps, ce que l'on a schématisé par les traits en pointillés t1, t2 et t3 avec t1 < t2 ≤ t3 (de préférence t2=t3, c'est-à-dire que C2 et C4 s'ouvrent pratiquement en même temps). Le coeur du dispositif comporte également un clapet de dérivation C1 à commande pneumatique, une différence de pression entre ses deux faces supérieure à un seuil déterminé entraînant son ouverture (ou sa fermeture selon la modalité de réalisation comme on le verra en relation avec les Figures 6 à 8). En parallèle (ou série selon la modalité de réalisation comme on le verra en relation avec les Figures 6 à 8) du clapet de dérivation C1 est disposée une dérivation comportant une restriction de passage sous forme d'une ouverture de dérivation O1 faisant que seul un débit limité d'air peut la traverser. Les clapets de mise à l'atmosphère C2 et de fuite C4 débouchent par des sorties à l'air libre qui est symbolisé ATM sur la Figure 1. La sortie à l'air libre du clapet de fuite C4 comporte une restriction (étranglement) de passage sous forme d'une ouverture de fuite O3. La conduite générale CG est directement reliée à la chambre de commande CC, d'une part, et à une première face du clapet de dérivation C1 avec son ouverture de dérivation O1 en parallèle, d'autre part. La seconde face du clapet de dérivation C1 est reliée au clapet de mise à l'atmosphère C2, d'une part, et à une première face du clapet d'isolement C3, d'autre part. La seconde face du clapet d'isolement C3 est reliée à une chambre de temporisation CT et à la chambre de réaction CR et au clapet de fuite C4. Les chambres de réaction CR et de temporisation CT sont donc en communication. Sur la Figure 1 on a représenté une liaison entre la chambre de temporisation CT et la chambre de réaction CR mais on comprend bien qu'il serait équivalent par exemple de relier cette dernière à la liaison de la seconde face du clapet d'isolement C3, tous ces éléments étant sur un même circuit commun, de tels équivalents étant vrais pour tous les circuits communs.

Le piston PC est ramené à une position de repos déterminée par un moyen de rappel de type ressort lorsqu'il n'y a pas de différence de pression entre ses deux faces ou, à tout le moins, une différence de pression si faible qu'elle ne permet pas le déplacement du piston. Dans cette position de repos du piston, le clapet de mise à l'atmosphère C2 est fermé, le clapet d'isolement C3 est ouvert et le clapet de fuite C4 est fermé, ces trois clapets étant actionnés par le piston. Dans cette position de repos, si la conduite générale qui était à la pression atmosphérique depuis un temps certain est mise en pression, la chambre de commande CC va voir sa pression augmenter alors que la mise en pression de la chambre de temporisation CT et de la chambre de réaction CR va être plus progressive. Toutefois, le piston de commande PC est en butée dans sa position de repos et ne va pas se déplacer quand la pression dans la chambre de commande CC est supérieure à la pression dans la chambre de réaction CR. Dans une variante décrite plus loin, on peut laisser le piston aller au delà de sa position d'équilibre dans le cas où la pression dans la chambre de commande CC devient supérieure à la pression dans la chambre de réaction CR. Une fois la pression équilibrée entre la chambre de commande CC, la chambre de temporisation CT et la chambre de réaction CR le dispositif est en en configuration de veille fonctionnelle dans laquelle il va suivre les évolutions de la pression dans la conduite générale CG et, selon les conditions, mettre en relation avec l'air libre la conduite générale CG en cas de baisse rapide de la pression dans la conduite générale CG.

Au bout d'un certain temps, la pression dans la conduite générale CG ayant été maintenue, par exemple à 5 bars, les pressions dans les chambres de commande CC et de réaction CR sont identiques et le piston est toujours à sa position de repos.

Si, maintenant, il y a une petite fuite sur la conduite générale CG et qui entraîne une baisse progressive de sa pression, baisse inférieure à environ 0,3 bar/min, l'ouverture de dérivation O1 est telle qu'elle permet l'équilibrage des pressions entre la chambre de commande CC et les chambres de réaction CR et de temporisation CT. Le piston ne se déplace donc pas.

Par contre, si la baisse de pression dans la conduite générale est plus rapide car correspondant à un freinage ou a une rupture d'attelage par exemple, l'ouverture de dérivation O1 ne permet plus le rééquilibrage des pressions entre la chambre de commande CC et les chambres de réaction CR et de temporisation CT. Il se crée donc un déséquilibre de pression entre la chambre de commande CC et la chambre de réaction CR qui va conduire au déplacement du piston. Les moyens de commande du piston permettent lors de son déplacement les fermeture/ouvertures successives des clapets d'isolement C3 (fermeture au premier temps t1), de mise à l'atmosphère C2 (ouverture au deuxième temps t2), de fuite C4 (ouverture au troisième temps t3).

Du fait que le clapet de dérivation C1 est configuré pour s'ouvrir du fait d'une différence de pression supérieure à une valeur déterminée entre ses faces, la différence de pression entre la conduite générale CG et l'atmosphère par l'ouverture du clapet de mise à l'atmosphère C2 provoque cette ouverture et une vidange rapide de la conduite générale CG à travers C1. On voit que la mise en oeuvre d'une chambre de temporisation (réserve d'air sous pression) et de son isolement par le clapet d'isolement C3 provoque une amplification de la détection de baisse de pression de la conduite générale par le piston PS car la pression dans la chambre de réaction CR va connaître une décroissance bien moindre (due à l'ouverture de fuite 03) que celle de la conduite générale CG. De plus, la section de réaction du piston de commande PC, coté chambre de réaction CR, augmente d'une valeur ΔS quant le clapet de mise à l'atmosphère C2 s'ouvre, d'où nouvelle amplification, et diminue d'une valeur ΔS quand le clapet de mise à l'atmosphère C2 se referme.

D'autre part, l'ouverture du clapet de fuite C4 va entraîner une baisse progressive de la pression dans les chambres de réaction CR et de temporisation CT qui sont en communication. Cette baisse progressive dépend de la taille de l'ouverture de fuite O3. La différence de pression entre les chambres de réaction CR et de commande va progressivement diminuer et le piston va finir par se déplacer en sens contraire du précédent pour revenir vers sa position de repos. Il en résulte que les clapets d'isolement C3, de mise à l'atmosphère C2, de fuite C4 vont se refermer/s'ouvrir selon une séquence inverse de la précédente. De plus, le clapet de dérivation C1 va finir par se refermer du fait que la différence de pression entre ses deux faces se réduit. On comprend qu'en fonction des temporisations, conditions de pression statique et dynamiques, la mise en communication de la conduite générale avec l'atmosphère, par le dispositif de l'invention, peut se répéter plusieurs fois au cours d'un freinage. Finalement, la pression dans la conduite générale restant basse ou remontant, le piston retourne à sa position de repos. Si la pression remonte dans la conduite générale, la pression dans la chambre de temporisation CT et de la chambre de réaction CR va pouvoir remonter comme expliqué précédemment.

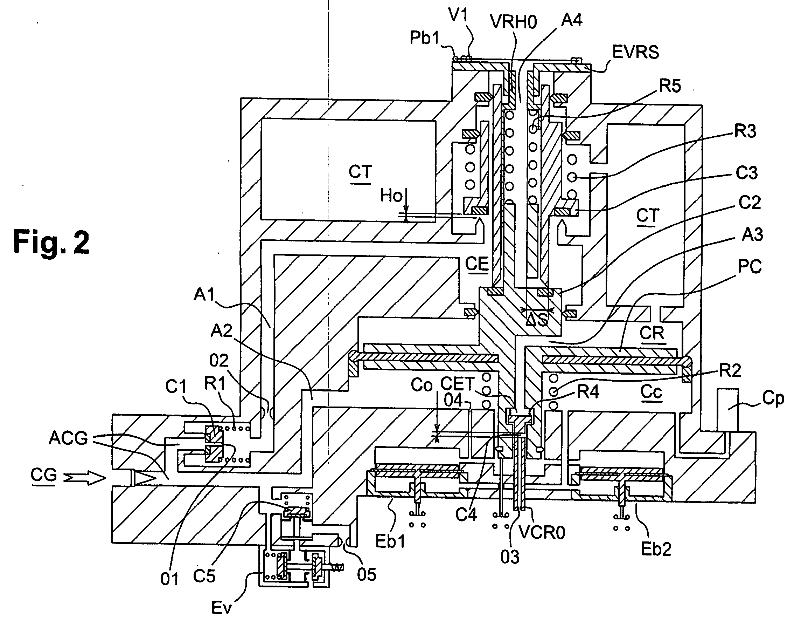

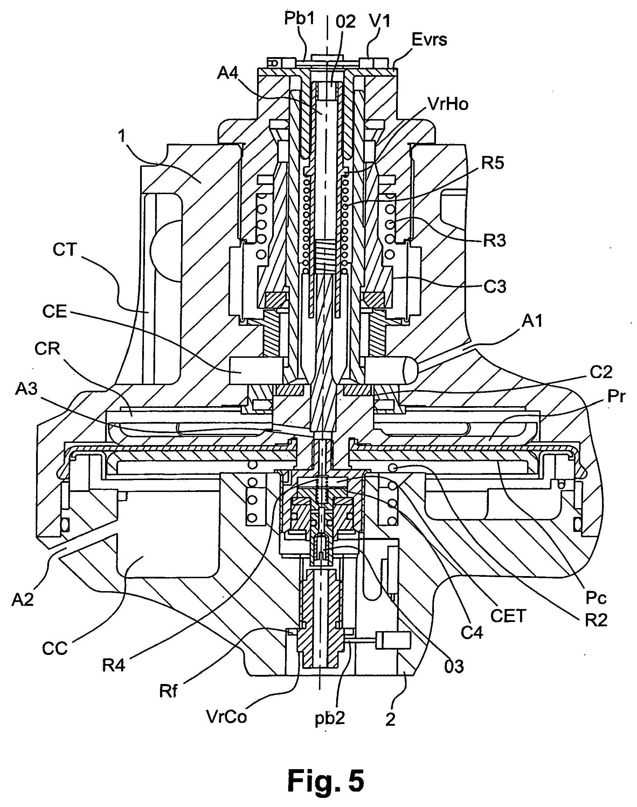

On peut noter sur la Figure 1 la présence d'un orifice à étranglement référencé O2 qui est une restriction de passage destinée à réduire le débit d'air lors de la mise à l'air libre de la conduite générale. Sur cette Figure 1, l'orifice à étranglement O2 peut être disposé sur une partie A1 du circuit fluidique (entre C1 et C2+C3 ou, plus précisément, CE Figures 2 à 4) comme représenté en traits plein. Cet orifice à étranglement O2 peut encore être disposé en sortie du dispositif, vers l'atmosphère ATM, (Figure 5) comme représenté en traits discontinus.

On va maintenant décrire un exemple de réalisation concret du dispositif de l'invention avec des plans schématiques tels que représentés sur les Figures 2 à 5. Sur ces figures, on peut constater que le piston comporte plusieurs parties fonctionnellement interdépendantes qui permettent l'actionnement séquentiel des clapets de mise à l'atmosphère C2, d'isolement C3 et de fuite C4. Sur ces figures on a également représenté certains des éléments d'une partie électropneumatique/électronique comme un capteur de pression électronique CP pour suivre la pression de la conduite générale (capteur ici disposé dans la chambre de commande CC), des détecteurs mécaniques à pistons d'état activé (et/ou non activé) Eb1 et Eb2 actionnant des contacts électriques (contact éveil 1 et contact éveil 2 respectivement), un contacteur piston (contact piston) détectant le déplacement du piston PC et une électrovanne de mise à l'atmosphère de la conduite générale CG (électrovanne EV et son clapet C5) une ouverture à restriction O5 y étant associée. De plus, un filtre à particules est disposé à l'entrée conduite générale du dispositif. D'autre part, un dispositif de sécurité type un fil plombé Pb1 est représenté.

En ce qui concerne des détecteurs mécaniques à pistons d'état activé (et/ou non activé) Eb1 et Eb2, ils sont disposés sur des circuits pneumatiques reliés à la chambre de commande CC et dont une partie comporte une restriction O4 et une autre est commutée par action du piston de commande PC. Ces circuits sont destinés à créer des différences de pression entre les deux faces des détecteurs mécaniques à pistons Eb1 et Eb2 lorsqu'il se produit des variations de pression dans la chambre de commande et de faciliter leur retour à un état de repos par égalisation des pressions (court circuit en parallèle de 04).

Sur la Figure 2, le dispositif est à l'état de repos (sans air). Les clapets C1, C2, C4, C5 sont alors fermés. Le clapet C3 est ouvert d'une valeur Ho. Le délai de retard d'ouverture du clapet de fuite dépend d'une distance réglable Co entre des moyens liés au piston et au clapet. A noter que les réglages des cotes Ho et Co sont à effectuer lorsque l'appareil est sous pression et prêt à fonctionner.

Lors de l'étape de remplissage (mise sous pression de la conduite générale CG), la pression en provenance de la conduite CG pénètre dans le dispositif et entre simultanément dans les canaux A1 et A2. Pour A1, le clapet C1 peut être amené à s'ouvrir initialement brièvement du fait de la différence de pression initiale importante entre ses faces. Il se produit un remplissage de la chambre de temporisation CT et de la chambre de réaction CR. En pratique, la pression de la conduite générale CG pénètre dans le canal A1 via C1 qui s'ouvre en pleine ouverture dans le sens de passage vers une chambre d'échappement CE en communication avec la chambre de temporisation CT via le clapet C3 dont l'ouverture passe de Ho à la pleine ouverture par l'action de la pression de la conduite générale CG qui, entrée dans la chambre de commande CC, agit directement sur le piston PC qui déplace le clapet C3 et provoque sa pleine ouverture (au delà de Ho). Il se produit également un remplissage de la chambre de réaction par l'air comprimé car la pression en provenance de la conduite générale CG, de préférence via la chambre de temporisation CT, passe dans la chambre de réaction CR. L'air de la chambre de réaction qui agit sur le piston PC va provoquer, au fur et à mesure que sa pression croît, la diminution de l'ouverture clapet C3 jusqu'à l'obtention de la cote d'ouverture Ho qui est atteinte lorsque les pressions dans les chambres de commande CC et de réaction CR sont égales.

Il se produit également un remplissage d'une chambre d'échappement de temporisation CET car de la chambre de réaction CR l'air sous pression entre dans la chambre CET via un canal A3. A l'extrémité de la chambre d'échappement de temporisation CET, le clapet C4 est en position fermée grâce à un ressort R4. Le réglage du jeu Co, obtenu par réglage à l'aide de la vis VrCo permet de régler le temps de réaction entre la mise à l'atmosphère de la conduite générale CG par l'ouverture du clapet C2 et la mise à l'atmosphère de la chambre de temporisation CT par l'ouverture du clapet C4. La pression nominale de la conduite générale est de 5 bars.

Une fois les pressions équilibrées dans le dispositif, celui ci est en état de veille fonctionnelle. Le piston PC est au repos et la chambre de réaction CR est, via l'ouverture Ho du clapet C3 et via l'orifice O1 du clapet C1, en communication avec la conduite générale CG. La chambre de commande CC est en communication avec la conduite générale CG via le canal A2. On peut remarquer que l'état de repos (sans air) représenté sur la Figure 2, est identique à l'état de veille fonctionnelle du point de vue des positions des clapets et du piston.

Le dispositif en état de veille fonctionnelle est prêt à identifier une consigne de freinage et à la transformer en consigne de mise en communication avec l'atmosphère de la conduite générale CG.

L'action de freinage par le robinet de mécanicien va entraîner une première dépression dans la conduite générale CG qui va se propager dans les chambres de commande CC et de réaction CR, d'une manière différente avec un différentiel de pression ΔP créé par la réduction de passage dû à l'orifice calibré O1 dans le clapet C1. Il en résulte une pression supérieure dans la chambre de réaction par rapport à la chambre de commande CC. Ce différentiel de pression entre la chambre de commande CC et la chambre de réaction CR va avoir pour conséquence de rompre de l'état d'équilibre de l'ensemble des équipages mobiles constitués du pistons PC et le clapet C2, des ressorts R2, R5, des clapets C3, C4 et du ressort R1 (clapet C1) ce qui va entraîner:
- D'une part, le déplacement de l'ensemble piston PC et clapet C2 qui se traduit par une diminution de la cote Ho jusqu'à la fermeture totale du clapet C3 qui aura pour effet instantané d'accroître le différentiel de pression entre les chambre de réaction CR et de commande CC puis de produire l'ouverture du clapet C2 qui va mettre la conduite générale CG à l'atmosphère via le clapet C1, le canal A1 et l'orifice à étranglement O2.
- D'autre part, va entraîner le déplacement du clapet C4 dont sa position restera fermée jusqu'à ce qu'il vienne en contact avec la vis VrCo de réglage à partir de laquelle le clapet C4 commencera à s'ouvrir pour atteindre sa pleine ouverture alors qu'est obtenue la pleine ouverture du clapet C2 qui met la conduite générale CG à l'atmosphère via l'orifice à étranglement O2.

La mise à l'atmosphère de la conduite générale CG via le clapet C2 et le canal A4 provoque, d'une part, une augmentation de la section de réaction du piston PC (coté chambre de réaction CR), d'autre part, une augmentation de la dépression dans la chambre de commande CC dû à la mise à l'atmosphère de la conduite générale CG. Ces deux actions simultanées vont provoquer:
- D'une part, la pleine ouverture du clapet C2 et la mise à l'atmosphère de la conduite générale CG via l'orifice à étranglement O2.
- D'autre part, l'ouverture du clapet C4 et la mise à l'atmosphère de la chambre de temporisation CT et de la chambre de réaction CR via le canal A3 et l'orifice O3.

Lorsque la chute de pression dans la chambre de réaction CR atteint la valeur de la pression de la chambre de commande CC et grâce au ressort de rappel R2 du piston PC, la fermeture progressive du clapet C2 va entraîner:
- Une diminution de la section du piston PC (coté chambre de réaction CR).
- Une augmentation de la pression dans la chambre de commande CC dû à l'effet d'égalisation de la pression de la conduite générale CG sur toute la longueur de train.

Ces deux derniers effets permettent d'assurer la fermeture du clapet C4 et l'ouverture à Ho du clapet C3 et de permettre ainsi le réarmement de la temporisation (remplissage de la chambre de temporisation CT).

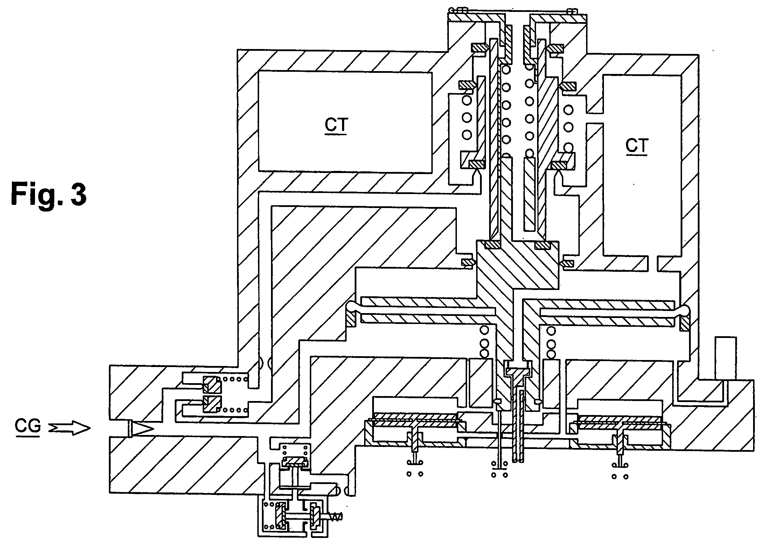

La Figure 3 donne une représentation d'un état intermédiaire de déclenchement de mise à l'atmosphère de la conduite générale. Dans cet état intermédiaire, le piston a commencé à se déplacer et le clapet C3 s'est fermé, le clapet C2 reste encore fermé tout comme le clapet C4. On peut noter que les détecteurs Eb1 et Eb2 se sont activés et les contacts éveille 1 et 2 ont basculés (ils peuvent mettre en marche l'équipement électronique associé ou avoir d'autres fonctions). Dans cet exemple de réalisation le contact piston n'a pas encore basculé car le déplacement du piston est encore insuffisant.

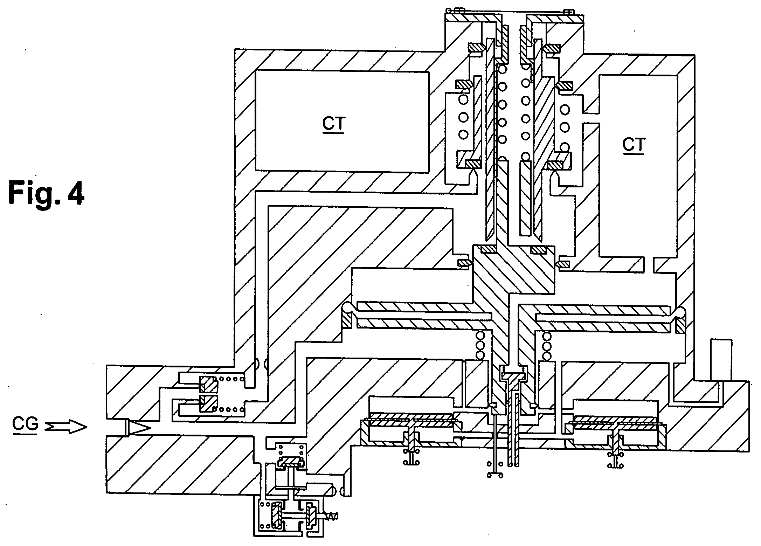

La Figure 4 donne une représentation d'un état avec mise à l'atmosphère de la conduite générale. Dans cet état, le piston a continué sa course jusqu'à ce que le clapet C2 s'ouvre ainsi que le clapet C4. Il en est résulté que C1 s'est ouvert. Cette fois, dans cet exemple, le contact piston a basculé.

Si après un premier cycle de mise à l'atmosphère de la conduite générale CG, la consigne de freinage est toujours active, le dispositif détectera la continuation de la baisse de pression dans la conduite générale CG et engagera un nouveau cycle de mise à l'atmosphère de la conduite générale CG comme décrit ci-dessus. L'engagement de nouveaux cycles de mise à l'atmosphère de la conduite générale CG se poursuivra tant qu'il y aura détection de consigne de freinage et qu'il existera une pression suffisante dans la conduite générale CG. Ainsi, pour un freinage d'urgence, la répétition des cycles se fera jusqu'à l'obtention d'une pression dans la conduite générale CG sensiblement égale à la pression atmosphérique.

On va maintenant analyser ce qui se passe lorsqu'il y a une action de desserrage des freins du train. Si, dans un cycle de mise à l'atmosphère de la conduite générale CG, le mécanicien effectue un desserrage du frein, ce qui entraîne une augmentation de la pression dans la conduite générale CG, le dispositif va réagir à l'augmentation de pression dans la chambre de commande CC qui va se traduire par un retour à la position de repos (C3 ouvert à Ho ou encore plus ouvert selon le mode de réalisation) avec notamment la fermeture du clapet C2.

Dans le cas d'une fuite lente sur la conduite générale, soit une chute d'environ 0,3 bar/min ou moins, la chute de pression dans la chambre de réaction CR est pratiquement identique à celle de la chambre de commande CC grâce au calibrage de l'orifice O1 qui assure un passage à l'air et grâce à l'ouverture Ho du clapet C3. Il en résulte que le piston n'est pas sollicité et que les équipages mobiles restent à leurs positions de repos en maintenant notamment le clapet C2 fermé.

Le dispositif de l'invention dispose donc d'un clapet C1 de type « by-pass » en parallèle avec un orifice O1 calibré à débit réduit, le clapet C1 étant passant à grand débit lorsqu'il s'ouvre et l'orifice calibré O1 laissant passer un faible débit lorsque le clapet C1 est fermé. Le calibrage du passage est suffisant pour éviter la mise à l'atmosphère de la conduite générale CG en cas de fuite lente provoquant une chute de pression inférieure à environ 0,3 bar/min. Le clapet C1 de type « by-pass » est situé dans une chambre d'arrivée de la conduite générale ACG et dans laquelle s'établit des communications avec la chambre de réaction CR via le clapet C1, le canal A1, le clapet C3, et avec la chambre de commande CC via le canal A2. Une telle configuration permet la création, lors d'une commande de freinage, d'un différentiel de pression entre les chambres de commande CC et de réaction CR ce qui va entraîner le déplacement des clapets C2, C3 et C4. Le clapet C4, situé un l'intérieur de la chambre d'échappement de temporisation CET, est lié au clapet C2. Grâce à la disposition des clapets C3, C2 et C4, l'ouverture du clapet C2 provoquant la mise à l'atmosphère de la conduite générale CG ne peut se produire que si le clapet C3 est fermé ce qui isole la chambre de temporisation CT de la chambre d'échappement CE. De plus, l'ouverture du clapet C4 ne peut se produire que lorsque le clapet C2 est ouvert. Lorsque le clapet C4 est ouvert, l'air sous pression de la chambre de temporisation CT s'échappe à l'atmosphère via l'orifice calibré O3 qui détermine par son diamètre la temporisation nécessaire pour que la pression de la chambre de temporisation s'équilibre avec celle de la chambre de commande CC, ce qui va entraîner la fermeture du clapet C2. Du fait de la structure fonctionnelle du dispositif, il y a possibilité de reconduction du cycle de mise à l'atmosphère de la conduite générale CG tant qu'il y a maintien de la commande de freinage. Le réglage de la position d'équilibre de l'ensemble des équipages mobiles du piston PC se fait dispositif au repos alimenté à la valeur de la pression conduite générale CG d'environ 5 bars, notamment pour réglage de la valeur Ho correspondant à la valeur d'ouverture du clapet C3 d'alimentation de la chambre de temporisation CT et de la chambre de réaction CR.

Les temporisations des actions du piston sur les clapets sont réglables et on va maintenant décrire certains des ajustements possibles. En ce qui concerne l'ajustement du temps d'ouverture du clapet C2 pour la mise à l'atmosphère de la conduite générale CG, la durée de la mise à l'atmosphère dépend du temps nécessaire pour équilibrage des pressions entre la chambre de commande CC et des chambres de réaction CR et de temporisation CT par leur mise à l'atmosphère via le clapet C4 et de l'orifice O3. Le réglage de la temporisation se fait par ajustement du débit dans l'orifice O3.

Une vis VrCo permet par le réglage de la cote Co de faire coïncider le départ de la temporisation, départ qui correspond à la mise à l'atmosphère de la chambre de temporisation CT par l'ouverture du clapet C4, avec la mise à l'atmosphère de la conduite générale CG par l'ouverture du clapet C2.

Le jeu Ho correspondant à l'ouverture du clapet C3 à l'état de veille fonctionnelle peut être réglé par l'intermédiaire d'une vis VrHo qui est bloquée en rotation par les deux pattes qui viennent se loger dans l'espace d'un croisillon de la queue du piston PC et empêche aussi sa rotation. Un écrou Evrs, par sa rotation, permet de faire monter ou descendre la vis VrHo et assure ainsi le réglage précis de la cote. Trois vis V1 et un plombage Pb1 viennent empêcher tout déréglage.

Dans des variantes d'autres réglages sont possibles. De plus certains éléments du dispositif peuvent être rendus interchangeables pour adaptation du dispositif à d'autres conditions opérationnelles. Ce peut être le cas, a titre d'exemple, du clapet de dérivation C1, ce qui permet de choisir la taille de l'ouverture de dérivation O1 (au cas où elle est intégrée au clapet) et/ou le seuil de pression pour l'ouverture dudit clapet C1. Dans une variante le clapet de dérivation C1 et l'ouverture de dérivation O1 sont deux éléments distincts éventuellement rendus amovibles et, éventuellement, chacun réglable.

La Figure 5 détaille un exemple de réalisation de l'invention. Sur la coupe partielle correspondante, le clapet de dérivation C1 et l'ouverture de dérivation O1 ne sont pas visibles. Le dispositif d'aide au freinage comporte un corps en deux principales parties 1 et 2 qui sont assemblées ensembles. On retrouve sur la Figure 5, d'une part, la chambre de temporisation CT, d'autre part, la chambre de commande CC et la chambre de réaction CR dans laquelle est disposé le piston de commande PC. Le piston PC commande le clapet de mise à l'atmosphère C2, le clapet d'isolement C3 et le clapet de fuite C4. Le piston et les moyens d'actionnement de clapets associés sont soumis à des efforts de ressorts dont un ressort R2 de rappel à la position de repos du piston et des ressors R3, R5 ce dernier en relation avec un moyen coulissant commandé par le piston et actionnant les clapets C2, C3. On retrouve les circuits fluidiques : A1 relié à la chambre d'échappement CE, A2 relié à la chambre de commande CC, A3 vers la chambre d'échappement de temporisation CET et le clapet de fuite C4 correspondant. En relation avec ce dernier clapet C4, vers le bas de la Figure 5, on retrouve un ressort R4 de poussée pour actionnement dudit clapet C4, l'ouverture de fuite O3 réglable, la vis VrCo de réglage du moment de début d'ouverture dudit clapet C4 et des moyens de sécurité à type de fil plombé Pb2 et écrou de blocage Rf. En relation avec les clapets C2 et C3, vers le haut de la Figure 5, outre les ressorts R3 et R5, on retrouve le circuit A4 qui sert à la mise à l'air libre de la conduite générale lorsque C2 est ouvert, la vis VrHo, l'orifice à étranglement O2 et des moyens de sécurité. Ainsi, dans cet exemple, l'orifice à étranglement O2 est en sortie du dispositif. Parmi ces derniers on retrouve un fil plombé Pb1, un écrou de blocage Evrs et des vis de blocage V1. Des moyens d'étanchéité sont mis en oeuvre, notamment à type de joints toriques, afin d'isoler pneumatiquement les différentes parties du dispositif qui doivent l'être.

On va maintenant résumer le fonctionnement du dispositif vu jusqu'à présent puis présenter une variante de réalisation. On rappelle que le dispositif d'aide au freinage ne doit pas mettre la conduite générale CG à l'atmosphère lorsqu'il existe une fuite lente sur cette-dernière, par exemple lorsque la fuite est inférieure ou égale à environ 0,3 bar/min, ce qui peut correspondre à une élimination de surcharge.

Dans le dispositif des Figures 1 à 5, à l'état de repos et d'équilibre, le clapet C3 est ouvert d'une valeur Ho et la pression dans la chambre de commande CC, reliée à la conduite générale CG, est sensiblement égale à celle de la chambre de réaction CR car ces deux chambres sont reliées entre-elles par le canal A2 au canal ACG (à la pression de la conduite générale), ce dernier étant relié via l'orifice O1 du clapet C1, le canal A1, la chambre CE et l'ouverture Ho du clapet C3 à la chambre de temporisation CT, cette dernière communiquant avec la chambre de réaction CR.

Dans le cas d'une fuite lente sur la conduite générale, la chute de pression se propage d'une façon sensiblement uniforme dans les chambres CC et CR grâce à l'orifice O1 du clapet de dérivation C1 (fermé) dont le calibrage de l'orifice est adapté pour un seuil de 0,3 bar/min dans cet exemple. Il en résulte une absence de mouvement du piston de commande du fait que le différentiel de pression entre la chambre CC et la chambre CR est pratiquement nul, et ce qui évite que le clapet C2 de mise à l'atmosphère de la conduite générale s'ouvre.

Dans le cas d'un freinage d'urgence ou même de service, le différentiel de pression entre la chambre de temporisation CT et la conduite générale dépasse la limite de 0,3 bar/min et il n'y a pas de rééquilibrage entre les pressions au sein du dispositif du fait de la petitesse de l'orifice O1. Il en résulte que le piston de commande se déplace et le clapet C3 se ferme et isole la conduite générale de la chambre de réaction CR, ce qui arrête la chute de pression dans la chambre de réaction CR. La chute de pression dans la conduite générale CG continuant, il y a alors un accroissement du différentiel de pression entre la chambre de commande CC et la chambre de réaction CR, ce qui entraîne une ouverture encore plus rapide du clapet C2 de mise à l'atmosphère de la conduite générale CG. De plus, le clapet de dérivation C1 finit par s'ouvrir, amplifiant la réponse du dispositif à la baisse de pression dans la conduite générale.

Dans la variante de réalisation du dispositif schématisée sur la Figure 6, le clapet de dérivation C1' (avec son ouverture de dérivation O1 calibrée en série cette fois au lieu d'être en parallèle) n'est plus disposé en série (Figures 1 à 5) mais en parallèle : d'une part, la chambre de temporisation CT est reliée à la conduite générale CG par l'intermédiaire du clapet de dérivation C1' et de son ouverture de dérivation O1 calibrée et, d'autre part, les clapets de mise à l'atmosphère C2 et d'isolement C3 (par l'intermédiaire de la chambre d'échappement CE) sont reliés à la conduite générale par un canal A1' qui comporte, de préférence, un orifice à étranglement (restriction de passage) O2. De plus, au repos, à l'équilibre, le clapet d'isolement C3 est fermé et le clapet de dérivation C1' est ouvert (il se ferme lorsqu'un différentiel de pression supérieur à un seuil est présent entre ses deux faces).

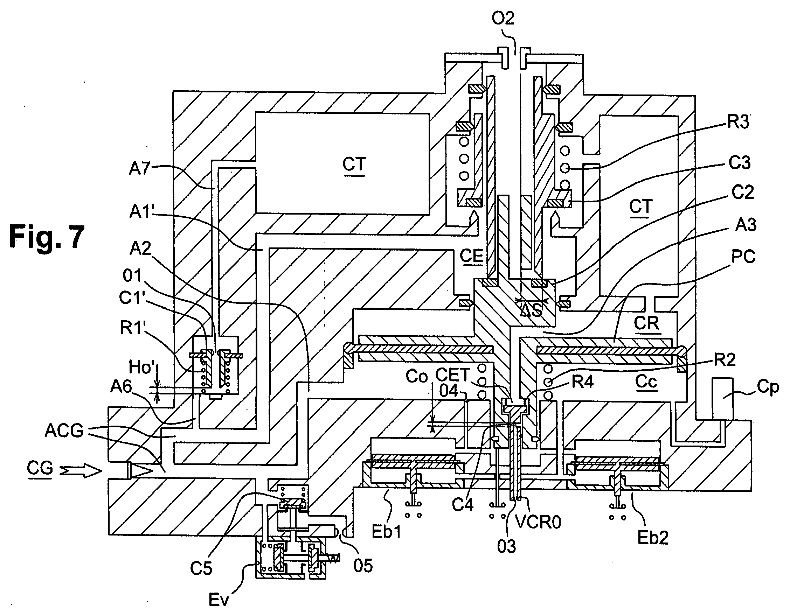

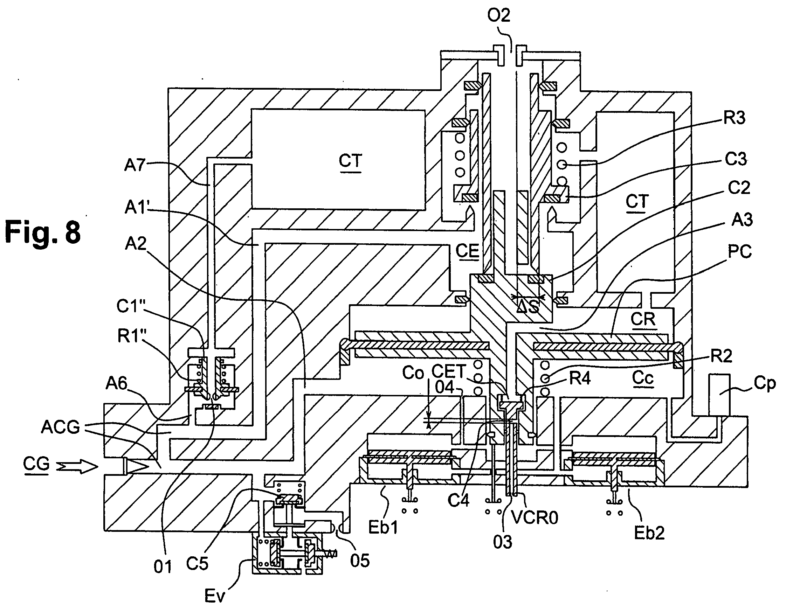

On peut noter sur la Figure 6 la présence d'un orifice à étranglement référencé O2 qui est une restriction de passage destinée à réduire le débit d'air lors de la mise à l'air libre de la conduite générale. Sur cette Figure 6, l'orifice à étranglement O2 peut être disposé sur une partie A1' (ou A1" Figure 8) du circuit fluidique (entre CG et C2+C3 ou, plus précisément, CE Figures 7, 8) comme représenté en traits discontinus. Cet orifice à étranglement O2 peut encore être disposé en sortie du dispositif, vers l'atmosphère ATM, (Figure 6) comme représenté en traits pleins.

Dans une première application représentée Figure 7 de la variante de réalisation schématisée sur la Figure 6, à l'état de repos et d'équilibre, le clapet C3 est fermé et la pression dans la chambre de commande CC, reliée à la conduite générale CG, est sensiblement égale à celle de la chambre de réaction CR car ces deux chambres sont reliées entre-elles par le canal A2 au canal ACG (à la pression de la conduite générale), ce dernier étant relié via un canal A6 par l'orifice O1 du clapet C1' qui est maintenu ouvert, ouverture Ho', grâce au ressort R1', puis un canal A7 relié à la chambre de temporisation CT, cette dernière communiquant avec la chambre de réaction CR.

Dans le cas d'une fuite lente sur la conduite générale, la chute de pression se propage d'une façon sensiblement uniforme dans les chambres CC et CR grâce à l'orifice O1 du clapet de dérivation C1' resté ouvert grâce au ressort R1', le calibrage de l'orifice O1 + le calibrage du ressort R1' étant adaptés pour un seuil de 0,3 bar/min dans cet exemple (absence de réaction du système pour une chute de pression <= 0,3 bar/min). Il en résulte une absence de mouvement du piston de commande du fait que le différentiel de pression entre la chambre CC et la chambre CR est pratiquement nul, et ce qui évite que le clapet C2 de mise à l'atmosphère de la conduite générale s'ouvre.

Dans le cas d'un freinage d'urgence ou même de service, le différentiel de pression entre la chambre de temporisation CT et la conduite générale dépasse la limite de 0,3 bar/min et il n'y a pas de rééquilibrage entre les pressions au sein du dispositif du fait de la petitesse de l'orifice O1 et du calibrage du ressort R1' qui fait que le clapet de dérivation C1' se ferme pour une chute de pression > 0,3 bar/min. Il en résulte que le piston de commande se déplace et ouvre le clapet C2 de mise à l'atmosphère de la conduite générale. Contrairement au premier exemple (Figure 1) dans lequel le clapet C3 est ouvert de la valeur Ho quant l'appareil est au repos et à l'équilibre, ici (Figures 6, 7 et 8), le clapet d'isolement C3 est fermé quant l'appareil est au repos. Ce clapet C3 s'ouvre (Figures 6, 7 et 8) lorsque la pression dans la chambre de commande CC est supérieure à la pression dans la chambre de réaction CR.

Dans une seconde application représentée Figure 8 de la variante de réalisation schématisée sur la Figure 6, à l'état de repos et d'équilibre, le clapet C3 est fermé et la pression dans la chambre de commande CC, reliée à la conduite générale CG, est sensiblement égale à celle de la chambre de réaction CR car ces deux chambres sont reliées entre elles par le canal A2 au canal ACG (à la pression de la conduite générale), ce dernier étant relié via un canal A6 par l'orifice O1 du clapet C1" qui est maintenu ouvert grâce au ressort R1 ", puis un canal A7 relié à la chambre de temporisation CT, cette dernière communiquant avec la chambre de réaction CR. A noter que par rapport à la Figure 6, le clapet C1' et son ressort R1' ont été changé en C1" et R1". En effet, le clapet C1" et son ressort R1" sont ici configurés pour se fermer pour une pression dans la conduite générale inférieure ou égale à sensiblement 4,5 bars et rester fermé tant que la pression dans la conduite générale reste inférieure ou égale à sensiblement 4,5 bars.

Comme précédemment, dans le cas d'une fuite lente sur la conduite générale, la chute de pression se propage d'une façon sensiblement uniforme dans les chambres CC et CR grâce à l'orifice O1 du clapet de dérivation C1" resté ouvert grâce au ressort R1 ", le calibrage de l'orifice O1 étant adapté pour un seuil de 0,3 bar/min et celui du ressort R1" à 4,5 bar (le clapet C1" se ferme lorsque le différentiel de pression entre ses deux faces atteint et dépasse 5 (pression normale de la CG) - 4,5 bar, soit 0,5 bar) dans cet exemple. Il en résulte une absence de mouvement du piston de commande du fait que le différentiel de pression entre la chambre CC et la chambre CR est pratiquement nul, et ce qui évite que le clapet C2 de mise à l'atmosphère de la conduite générale s'ouvre.

Ainsi, par rapport à la première application, Figure 7, cette seconde application, Figure 8, comporte un clapet C1" dont le ressort R1" est calibré à 0,5 bar et le clapet C1" se ferme lorsque le différentiel de pression entre ses deux faces atteint et dépasse 0,5 bar. Ainsi, dans le cas d'un freinage d'urgence ou même de service, le différentiel de pression entre la chambre de temporisation CT et la conduite générale dépasse la limite de 0,3 bar/min et il n'y a pas de rééquilibrage entre les pressions au sein du dispositif et il en résulte que le piston de commande se déplace et ouvre le clapet C2 de mise à l'atmosphère de la conduite générale. De plus, le clapet de dérivation C1" se ferme lorsque la pression de la conduite générale CG descend vers 4,5 bar (en supposant une pression initiale de la conduite générale à 5 bar au repos/équilibre). Il en résulte que la chute de pression dans la chambre de temporisation est arrêtée, ce qui augmente encore plus le différentiel de pression entre les chambres de réaction CR et de commande CC si la pression dans la conduite générale CG continue à décroître. A noter que sur les Figures 7 et 8, l'orifice à restriction O2 est en sortie du dispositif vers l'atmosphère.

On comprend que l'invention présentée dans son principe général peut être réalisée selon d'autres formes que celle exemplifiée. Le dispositif réalisé peut comporter plus ou moins de possibilités de réglage selon les besoins et être éventuellement associé à d'autres dispositifs lui apportant une sécurité accrue et/ou d'autres fonctionnalités. Par exemple, la chambre de temporisation CT et la chambre de réaction CR peuvent être réunies en une seule chambre de réaction de grand volume actionnant le piston au lieu d'être deux chambres séparées réunies par un circuit fluidique. Enfin, chacun des éléments mis en oeuvre (clapets C1, C2, C3, C1', C1 ", R1 etc.) avec ses valeurs propres de réaction peut être utilisé dans d'autres combinaisons compatibles de ces éléments selon les principes généraux des circuits présentés.

## Revendications

1. Dispositif d'aide au freinage de matériel ferroviaire roulant, le freinage dudit matériel étant commandé par des variations à la baisse de pression d'air comprimé dans une conduite générale, le dispositif relié à ladite conduite générale comportant des moyens détecteurs et effecteurs ainsi que des circuits fluidiques entre lesdits moyens détecteurs et effecteurs, lesdits moyens détecteurs et effecteurs analysant les variations de pression dans ladite conduite et provoquant une mise en relation avec l'atmosphère de ladite conduite générale lors d'un freinage, les moyens détecteurs et effecteurs du dispositif étant pneumo-mécaniques, les moyens détecteurs et effecteurs et les circuits fluidiques du dispositif étant configurés pour ne provoquer la mise en relation avec l'atmosphère de la conduite générale que pour une variation temporelle de pression supérieure à un seuil déterminé, ladite mise à l'atmosphère de la conduite générale ne durant que pendant une durée prédéterminée,
**caractérisé en ce que** les moyens détecteurs et effecteurs et les circuits fluidiques du dispositif sont au moins un piston de commande dont la première face est dans une chambre de réaction (CR) et la seconde face dans une chambre de commande (CC), le piston de commande pouvant se déplacer sous l'effet d'une différence de pression entre la chambre de réaction et la chambre de commande, un moyen de rappel élastique permettant de ramener ledit piston à une position de repos en l'absence de différence de pression,
la chambre de commande (CC) étant reliée directement à la conduite générale et la chambre de réaction (CR) étant reliée directement à une chambre de temporisation (CT), un circuit fluidique de dérivation en dérivation de la conduite générale étant établi avec la chambre de temporisation, ledit circuit fluidique de dérivation comportant sur son trajet au moins, d'une part, un clapet de dérivation (C1 ou C1' ou C1 ") pouvant s'ouvrir ou se fermer en fonction d'une différence de pression entre ses deux faces et, d'autre part, une ouverture de dérivation (O1) calibrée, ladite ouverture de dérivation (O1) ne permettant qu'un passage réduit d'air, ledit circuit fluidique de dérivation étant configuré pour permettre l'équilibrage des pressions entre la chambre de réaction (CR) et la chambre de commande (CC) pour une variation temporelle de pression dans la conduite générale inférieure à un seuil déterminé, de préférence inférieure à 0,3 bar/min.

2. Dispositif selon la revendication 1, **caractérisé en ce que** les moyens détecteurs et effecteurs et les circuits fluidiques du dispositif sont au moins :
- un piston de commande dont la première face est dans une chambre de réaction (CR) et la seconde face dans une chambre de commande (CC), le piston de commande pouvant se déplacer sous l'effet d'une différence de pression entre la chambre de réaction et la chambre de commande, un moyen de rappel élastique permettant de ramener ledit piston à une position de repos en l'absence de différence de pression,
le piston de commande permettant d'actionner en ouverture et fermeture un clapet de mise à l'atmosphère (C2), un clapet d'isolement (C3) et un clapet de fuite (C4),
- une chambre de temporisation (CT) permettant de stocker de l'air comprimé et reliée au clapet de fuite (C4), le clapet de fuite permettant de mettre en communication ou non la chambre de temporisation (CT) avec l'atmosphère par l'intermédiaire d'une ouverture (O3) de fuite calibrée, ladite ouverture ne permettant qu'un passage réduit de l'air,
- un clapet de dérivation (C1) pouvant s'ouvrir ou se fermer en fonction d'une différence de pression entre ses deux faces et comportant en parallèle une ouverture de dérivation (O1) calibrée, ladite ouverture ne permettant qu'un passage réduit de l'air arrivant sur ledit clapet de dérivation,
et **en ce que** la chambre de commande (CC) est reliée directement à la conduite générale et la chambre de réaction (CR) est reliée directement à la chambre de temporisation, un circuit fluidique de dérivation en dérivation de la conduite générale étant établi avec la chambre de temporisation, ledit circuit fluidique de dérivation comportant sur son trajet, le clapet de dérivation (C1) avec son ouverture de dérivation (O1) calibrée en parallèle et le clapet d'isolement (C3), le clapet de mise à l'atmosphère (C2) étant disposé en prise sur ledit circuit fluidique de dérivation entre le clapet de dérivation (C1) et le clapet d'isolement (C3),
et **en ce qu'**en veille, une pression nominale d'air comprimé ayant été établie dans la conduite générale pendant un temps suffisant pour mettre en veille ledit dispositif, le piston étant à sa position de repos, la chambre de temporisation (CT) et la chambre de réaction (CR) étant à une pression sensiblement égale à celle de la conduite générale, le clapet de dérivation (C1) est fermé, le clapet de mise à l'atmosphère (C2) est fermé, le clapet d'isolement (C3) est ouvert et le clapet de fuite (C4) est fermé,
et le dispositif comporte des moyens pour que lorsque à un temps t0 la pression dans la conduite générale baisse de telle manière qu'il se crée une différence de pression entre la chambre de réaction (CR) et chambre de commande (CC) du fait que la petitesse de l'ouverture (O1) de dérivation du clapet de dérivation (C1) ne permet pas le rééquilibrage des pressions entre les deux chambres, le piston de commande se déplace et entraîne, dans un premier temps t1, la fermeture du clapet d'isolement (C3) puis, dans un deuxième temps t2, l'ouverture du clapet de mise à l'atmosphère (C2) puis, dans un troisième temps t3, l'ouverture du clapet de fuite (C4) ce qui entraîne une vidange progressive de la chambre de temporisation (CT) et de la chambre de réaction (CR), le rééquilibrage des pressions entre les deux chambres de réaction CR et de commande (CC) au bout d'un temps déterminé fonction de l'ouverture de fuite (O3) calibrée ramenant le piston vers sa position de repos.

3. Dispositif selon la revendication 2, **caractérisé en ce que** le délai entre t0 et le premier temps t1 est réglable, en veille, piston au repos, le clapet d'isolement (C3) ouvert ayant une hauteur d'ouverture de passage Ho ajustable, en fonctionnement la hauteur d'ouverture de passage variant en relation avec les déplacements du piston de commande pour ouvrir ou fermer ledit clapet d'isolement (C3).

4. Dispositif selon la revendication 1, **caractérisé en ce que** les moyens détecteurs et effecteurs et les circuits fluidiques du dispositif sont au moins :
- un piston de commande dont la première face est dans une chambre de réaction (CR) et la seconde face dans une chambre de commande (CC), le piston de commande pouvant se déplacer sous l'effet d'une différence de pression entre la chambre de réaction et la chambre de commande, un moyen de rappel élastique permettant de ramener ledit piston à une position de repos en l'absence de différence de pression,
le piston de commande permettant d'actionner en ouverture et fermeture un clapet de mise à l'atmosphère (C2), un clapet d'isolement (C3) et un clapet de fuite (C4),
- une chambre de temporisation (CT) permettant de stocker de l'air comprimé et reliée au clapet de fuite (C4), le clapet de fuite permettant de mettre en communication ou non la chambre de temporisation (CT) avec l'atmosphère par l'intermédiaire d'une ouverture (O3) de fuite calibrée, ladite ouverture ne permettant qu'un passage réduit de l'air,
- un clapet de dérivation (C1' ou C1") pouvant s'ouvrir ou se fermer en fonction d'une différence de pression entre ses deux faces et comportant en série une ouverture de dérivation (O1) calibrée, ladite ouverture ne permettant qu'un passage réduit de l'air arrivant sur ledit clapet de dérivation,
et **en ce que** la chambre de commande (CC) est reliée directement à la conduite générale et la chambre de réaction (CR) est reliée directement à la chambre de temporisation, un circuit fluidique de dérivation en dérivation de la conduite générale étant établi avec la chambre de temporisation, ledit circuit fluidique de dérivation comportant sur son trajet le clapet de dérivation (C1' ou C1 ") et l'ouverture de dérivation (O1) calibrée,
la conduite générale est reliée par un circuit fluidique (A1') à la fois au clapet d'isolement (C3) et au clapet de mise à l'atmosphère (C2),
et **en ce qu'**en veille, une pression nominale d'air comprimé ayant été établie dans la conduite générale pendant un temps suffisant pour mettre en veille ledit dispositif, le piston étant à sa position de repos, la chambre de temporisation (CT) et la chambre de réaction (CR) étant à une pression sensiblement égale à celle de la conduite générale, le clapet de dérivation (C1' ou C1 ") est ouvert, le clapet de mise à l'atmosphère (C2) est fermé, le clapet d'isolement (C3) est fermé et le clapet de fuite (C4) est fermé,
et le dispositif comporte des moyens pour que lorsque à un temps t0 la pression dans la conduite générale baisse de telle manière qu'il se crée une différence de pression entre la chambre de réaction (CR) et chambre de commande (CC) du fait que la petitesse de l'ouverture (O1) de dérivation ne permet pas le rééquilibrage des pressions entre les deux chambres, le piston de commande se déplace et entraîne, dans un premier temps t1, la continuation de la fermeture du clapet d'isolement (C3) puis, dans un deuxième temps t2, l'ouverture du clapet de mise à l'atmosphère (C2) puis, dans un troisième temps t3, l'ouverture du clapet de fuite (C4) ce qui entraîne une vidange progressive de la chambre de temporisation (CT) et de la chambre de réaction (CR), le rééquilibrage des pressions entre les deux chambres de réaction (CR) et de commande (CC) au bout d'un temps déterminé fonction de l'ouverture de fuite (O3) calibrée ramenant le piston vers sa position de repos.

5. Dispositif selon l'une quelconque des revendications 1 à 4, **caractérisé en ce que** le clapet de dérivation (C1 ou C1' ou C1 ") pouvant s'ouvrir ou se fermer en fonction d'une différence de pression entre ses deux faces comporte un ressort (R1 ou R1' ou R1 ") calibré pour ne permettre le déplacement du clapet que pour une variation de pression temporelle supérieure à 0,3 bar/min.

6. Dispositif selon l'une quelconque des revendications 2 à 5, caractérisé en ce -que le circuit fluidique permettant la mise à l'air libre de la conduite générale via le clapet de mise à l'atmosphère (C2) comporte un orifice à étranglement (O2) destiné à réduire le débit dans ledit circuit lors de la liaison directe entre l'air libre et la conduite générale.

7. Dispositif selon l'une quelconque des revendications 2 à 6, **caractérisé en ce que** l'ouverture du clapet de mise à l'atmosphère (C2) ne peut avoir lieu que lorsque le clapet d'isolement (C3) est fermé, le clapet de mise à l'atmosphère (C2) et le clapet d'isolement (C3) étant actionnés par un organe d'actionnement commun lui même actionné par le piston, la fermeture du clapet d'isolement (C3) formant une butée pour l'organe d'actionnement commun.

8. Dispositif selon l'une quelconque des revendications 2 à 7, **caractérisé en ce que** le délai entre le début du deuxième temps t2 d'ouverture du clapet de mise à l'atmosphère (C2) et le début du troisième temps t3 d'ouverture du clapet de fuite (C4) est réglable, en veille, piston au repos, le clapet de fuite (C4) étant disposé à une distance Co ajustable d'un organe de poussée qui est destiné lorsqu'il est appuyé sur le clapet de fuite (C4), à ouvrir ledit clapet de fuite, en fonctionnement la distance entre le clapet de fuite (C4) et l'organe de poussée variant en relation avec les déplacements du piston de commande pour ouvrir ou fermer ledit clapet de fuite (C4).

9. Dispositif selon la revendication 8, **caractérisé en ce que** l'organe de poussée est immobile et le clapet de fuite (C4) est solidaire du piston.

10. Dispositif selon l'une quelconque des revendications précédentes, **caractérisé en ce qu'**il comporte en outre circuit de contrôle et commande électronique et une électrovanne de mise à l'atmosphère de la conduite générale et au moins un capteur, ladite électrovanne étant normalement fermée, ledit au moins un capteur étant un capteur de pression de la conduite générale, ledit circuit électronique comportant des moyens provoquant l'ouverture de l'électrovanne dans des conditions déterminées fonction de mesures du/des capteurs.

## Patentansprüche

1. Bremsunterstützungsvorrichtung für Schienenfahrzeuge, wobei die Bremsung der besagten Fahrzeuge durch unterschiedliches Senken des Drucks der Luft in einer Hauptbremsleitung erfolgt, wobei die mit der Hauptbremsleitung verbundene Vorrichtung Erfassungsmittel und Ausführungsmittel sowie Fluidkreise zwischen den besagten Erfassungsmitteln und Ausführungsmitteln aufweist, wobei die Erfassungsmittel und Ausführungsmittel die Druckveränderungen in der besagten Hauptbremsleitung analysieren und bei einer Bremsung eine Verbindung der Hauptbremsleitung mit der Atmosphäre herstellen, wobei die Erfassungsmittel und Ausführungsmittel der Vorrichtung pneumo-mechanisch sind, wobei die Erfassungsmittel und Ausführungsmittel und die Fluidkreise der Vorrichtung derart ausgelegt sind, daß sie die Verbindung der Hauptbremsleitung mit der Atmosphäre nur bei einer zeitlichen Druckänderung ausführen, die höher als ein vorgegebener Schwellwert ist, wobei die Verbindung der Hauptbremsleitung mit der Atmosphäre nur eine vorbestimmte Zeit andauert,
**dadurch gekennzeichnet, daß** die Erfassungsmittel und Ausführungsmittel und die Fluidkreis der Vorrichtung wenigstens ein Steuerkolben sind, dessen erste Seite sich in einer Reaktionskammer (CR) befindet und dessen zweite Seite sich in einer Steuerkammer (CC) befindet, wobei sich der Steuerkolben unter dem Einfluß eines Druckunterschieds zwischen der Reaktionskammer und der Steuerkammer bewegt, wobei ein elastisches Rückholmittel den besagten Kolben bei Nichtvorliegen eines Druckunterschieds in eine Ruhestellung zurückholen kann, wobei die Steuerkammer (CC) direkt mit der Hauptbremsleitung verbunden ist und die Reaktionskammer (CC) direkt mit einer Verzögerungskammer (CT) verbunden ist, wobei ein Fluidabzweigkreis als Abzweigung der Hauptbremsleitung mit der Verzögerungskammer gebildet ist, wobei der Fluidabzweigkreis in seinem Verlauf wenigstens einerseits eine Abzweigklappe (C 1 oder C1' oder C1"), die sich in Abhängigkeit von einem Druckunterschied zwischen deren beiden Seiten öffnen oder schließen kann, und andererseits eine kalibrierte Abzweigöffnung (O1) aufweist, wobei die Abzweigöffnung (O1) nur einen reduzierten Luftdurchfluß erlaubt, wobei der Fluidabzweigkreis dazu ausgelegt ist, ein Gleichgewicht der Drücke zwischen der Reaktionskammer (CR) und der Steuerkammer (CC) für eine zeitliche Veränderung des Drucks in der Hauptbremsleitung, die unter einem bestimmten Schwellwert liegt, vorzugsweise unter 0,3 bar/min, zu ermöglichen.

2. Vorrichtung gemäß Anspruch 1, **dadurch gekennzeichnet, daß** die Erfassungsmittel und Ausführungsmittel und die Fluidkreise der Vorrichtung wenigstens
- ein Steuerkolben, dessen erste Seite sich in einer Reaktionskammer (CR) und dessen zweite Seite sich in einer Steuerkammer (CC) befindet, wobei sich der Steuerkolben unter dem Einfluß eines Druckunterschieds zwischen der Reaktionskammer und der Steuerkammer bewegen kann, wobei ein elastisches Rückholmittel den besagten Kolben bei Nichtvorliegen eines Druckunterschieds in eine Ruhestellung zurückholen kann,
wobei der Steuerkolben eine Klappe zum Verbinden mit der Atmosphäre (C2), eine Trennklappe (C3) und eine Leckklappe (C4) zum Öffnen und Schließen betätigen kann,
- eine Verzögerungskammer (CT), die ermöglicht, Druckluft zu speichern, und die mit der Leckklappe (C4) verbunden ist, wobei die Leckklappe ermöglicht, die Verzögerungskammer (CT) über eine kalibrierte Lecköffnung (O3) mit der Atmosphäre zu verbinden oder auch nicht, wobei die besagte Öffnung nur einen reduzierten Luftdurchlaß ermöglicht,
- eine Abzweigklappe (C1), die sich in Abhängigkeit von einem Druckunterschied zwischen deren beiden Seiten öffnen oder schließen kann und parallel eine kalibrierte Abzweigöffnung (O1) aufweist, wobei die besagte Öffnung nur einen reduzierten Durchlaß der an der Abzweigklappe ankommenden Luft ermöglicht,
sind
und daß die Steuerkammer (CC) direkt mit der Hauptbremsleitung verbunden ist und die Reaktionskammer (CR) direkt mit der Verzögerungskammer verbunden ist, wobei ein Fluidabzweigkreis als Abzweigung der Hauptbremsleitung mit der Verzögerungskammer gebildet ist, wobei der Fluidabzweigkreis in seinem Verlauf die Abzweigklappe (C1) mit deren kalibrierter paralleler Abzweigöffnung (O1) und die Trennklappe (C3) aufweist, wobei die Klappe zum Verbinden mit der Atmosphäre (C2) auf dem Fluidabzweigkreis zwischen der Abzweigklappe (C1) und der Trennklappe (C3) angeordnet ist,
und daß im Bereitschaftszustand in der Hauptbremsleitung ein Nominaldruck der Druckluft während einer Dauer gehalten wird, die ausreicht, um die Vorrichtung in einen Bereitschaftszustand zu versetzen, wobei sich der Kolben in seiner Ruheposition befindet, wobei die Verzögerungskammer (CT) und die Reaktionskammer (CR) unter einem Druck stehen, der in etwa gleich dem der Hauptbremsleitung ist, wobei die Abzweigklappe (C1) geschlossen ist, die Klappe zum Verbinden mit der Atmosphäre (C2) geschlossen ist, die Trennklappe (C3) geschlossen ist und die Leckklappe (C4) geschlossen ist,
und die Vorrichtung Mittel aufweist, damit, wenn der Druck in der Hauptbremsleitung zu einem Zeitpunkt t0 derart sinkt, daß aufgrund der Tatsache, daß das kleine Kaliber der Abzweigöffnung (O1) der Abzweigklappe (C1) das Gleichgewicht der Drücke zwischen den beiden Kammern nicht wiederherstellen kann, ein Druckunterschied zwischen der Reaktionskammer (CR) und der Steuerkammer (CC) entsteht, sich der Steuerkolben bewegt und während einer ersten Zeit t1 das Schließen der Trennklappe (C3) und dann, während einer zweiten Zeit t2, das Öffnen der Klappe zum Verbinden mit der Atmosphäre (C2) und dann, während einer dritten Zeit t3, das Öffnen der Leckklappe (C4) bewirkt, was ein progressives Entleeren der Verzögerungskammer (CT) und der Reaktionskammer (CR) bewirkt, wobei das Wiederherstellen des Gleichgewichts der Drücke zwischen den beiden Kammern, d.h. der Reaktionskammer (CR) und der Steuerkammer (CC), nach Ablauf einer bestimmten Zeit, die von der kalibrierten Lecköffnung (O3) abhängt, den Kolben wieder in seine Ruheposition zurückbringt.

3. Vorrichtung gemäß Anspruch 2, **dadurch gekennzeichnet, daß** die Verzögerung zwischen t0 und der ersten Zeit t1 einstellbar ist, wobei die geöffnete Trennklappe (C3) im Bereitschaftszustand mit dem Kolben im Ruhezustand eine einstellbare Höhe Ho der Durchlaßöffnung aufweist und sich die Höhe der Durchlaßöffnung im Betriebszustand in Abhängigkeit von den Bewegungen des Steuerkolbens verändert, um die Trennklappe (C3) zu öffnen und zu schließen.

4. Vorrichtung gemäß Anspruch 1, **dadurch gekennzeichnet, daß** die Erfassungsmittel und Ausführungsmittel und die Fluidkreise der Vorrichtung wenigstens
- ein Steuerkolben, dessen erste Seite sich in einer Reaktionskammer (CR) und dessen zweite Seite sich in einer Steuerkammer (CC) befindet, wobei sich der Steuerkolben unter dem Einfluß eines Druckunterschieds zwischen der Reaktionskammer und der Steuerkammer bewegen kann, wobei ein elastisches Rückholmittel den besagten Kolben bei Nichtvorliegen eines Druckunterschieds in eine Ruhestellung zurückholen kann,
wobei der Steuerkolben eine Klappe zum Verbinden mit der Atmosphäre (C2), eine Trennklappe (C3) und eine Leckklappe (C4) zum Öffnen und Schließen betätigen kann,
- eine Verzögerungskammer (CT), die ermöglicht, Druckluft zu speichern, und die mit der Leckklappe (C4) verbunden ist, wobei die Leckklappe ermöglicht, die Verzögerungskammer (CT) über eine kalibrierte Lecköffnung (O3) mit der Atmosphäre zu verbinden oder auch nicht, wobei die besagte Öffnung nur einen reduzierten Luftdurchlaß ermöglicht,
- eine Abzweigklappe (C1' oder C1"), die sich in Abhängigkeit von einem Druckunterschied zwischen deren beiden Seiten öffnen oder schließen kann und in Reihe eine kalibrierte Abzweigöffnung (O1) aufweist, wobei die besagte Öffnung nur einen reduzierten Durchlaß der an der Abzweigklappe ankommenden Luft ermöglicht,
sind
und daß die Steuerkammer (CC) direkt mit der Hauptbremsleitung verbunden ist und die Reaktionskammer (CR) direkt mit der Verzögerungskammer verbunden ist, wobei ein Fluidabzweigkreis als Abzweigung der Hauptbremsleitung mit der Verzögerungskammer gebildet ist, wobei der Fluidabzweigkreis in seinem Verlauf die Abzweigklappe (C1' oder C1") und die kalibrierte Abzweigöffnung (O1) aufweist,
wobei die Hauptbremsleitung durch einen Fluidkreis (A1`) zugleich mit der Trennklappe (C3) und der Klappe zum Verbinden mit der Atmosphäre (C2) verbunden ist,
und daß im Bereitschaftszustand in der Hauptbremsleitung ein Nominaldruck der Druckluft während einer Dauer gehalten wird, die ausreicht, um die Vorrichtung in einen Bereitschaftszustand zu versetzen, wobei sich der Kolben in seiner Ruheposition befindet, wobei die Verzögerungskammer (CT) und die Reaktionskammer (CR) unter einem Druck stehen, der in etwa gleich dem der Hauptbremsleitung ist, wobei die Abzweigklappe (C1' oder C1") geschlossen ist, die Klappe zum Verbinden mit der Atmosphäre (C2) geschlossen ist, die Trennklappe (C3) geschlossen ist und die Leckklappe (C4) geschlossen ist,
und die Vorrichtung Mittel aufweist, damit, wenn der Druck in der Hauptbremsleitung zu einem Zeitpunkt t0 derart sinkt, daß aufgrund der Tatsache, daß das kleine Kaliber der Abzweigöffnung (O1) der Abzweigklappe (C1) das Gleichgewicht der Drücke zwischen den beiden Kammern nicht wiederherstellen kann, ein Druckunterschied zwischen der Reaktionskammer (CR) und der Steuerkammer (CC) entsteht, sich der Steuerkolben bewegt und während einer ersten Zeit t1 das Schließen der Trennklappe (C3) und dann, während einer zweiten Zeit t2, das Öffnen der Klappe zum Verbinden mit der Atmosphäre (C2) und dann, während einer dritten Zeit t3, das Öffnen der Leckklappe (C4) bewirkt, was ein progressives Entleeren der Verzögerungskammer (CT) und der Reaktionskammer (CR) bewirkt, wobei das Wiederherstellen des Gleichgewichts der Drücke zwischen den beiden Kammern, d.h. der Reaktionskammer (CR) und der Steuerkammer (CC), nach Ablauf einer bestimmten Zeit, die von der kalibrierten Lecköffnung (O3) abhängt, den Kolben wieder in seine Ruheposition zurückbringt.

5. Vorrichtung gemäß einem der Ansprüche 1 bis 4, **dadurch gekennzeichnet, daß** die Abzweigklappe (C1 oder C1' oder C1"), die sich in Abhängigkeit von einem Druckunterschied zwischen ihren beiden Seiten öffnen oder schließen kann, eine Feder (R1 oder R1' oder R1") aufweist, die so kalibriert ist, daß sie eine Bewegung der Klappe nur bei einer zeitlichen Druckänderung von mehr als 0,3 bar/min ermöglicht.

6. Vorrichtung gemäß einem der Ansprüche 2 bis 5, **dadurch gekennzeichnet, daß** der Fluidkreis, der eine Verbindung der Hauptbremsleitung mit der freien Luft über die Klappe zum Verbinden mit der Atmosphäre (C2) ermöglicht, eine Drosselbohrung (O2) aufweist, die dazu bestimmt ist, den Durchfluß im besagten Kreis während der direkten Verbindung zwischen der freien Luft und der Hauptbremsleitung zu reduzieren.

7. Vorrichtung gemäß einem der Ansprüche 2 bis 6, **dadurch gekennzeichnet, daß** das Öffnen der Klappe zum Verbinden mit der Atmosphäre (C2) nur erfolgen kann, wenn die Trennklappe (C3) geschlossen ist, wobei die Klappe zum Verbinden mit der Atmosphäre (C2) und die Trennklappe (C3) durch ein gemeinsames Betätigungsorgan betätigt werden, das seinerseits durch den Kolben betätigt wird, wobei das Schließen der Trennklappe (C3) für das gemeinsame Betätigungsorgan einen Anschlag bildet.

8. Vorrichtung gemäß einem der Ansprüche 2 bis 7, **dadurch gekennzeichnet, daß** die Verzögerung zwischen dem Beginn der zweiten Öffnungszeit t2 der Klappe zum Verbinden mit der Atmosphäre (C2) und dem Beginn der dritten Öffnungszeit t3 der Leckklappe (C4) einstellbar ist, wobei die Leckklappe (C4) im Bereitschaftszustand mit dem Kolben in Ruhestellung in einem einstellbaren Abstand Co eines Stoßorgans angeordnet ist, das dazu bestimmt ist, wenn es auf die Leckklappe (C4) gedrückt wird, die Leckklappe zu Öffnen, und wobei sich der Abstand zwischen der Leckklappe (C4) und dem Stoßorgan in Abhängigkeit von den Bewegungen des Steuerkolbens zum Öffnen oder Schließen der Leckklappe (C4) verändert.

9. Vorrichtung gemäß Anspruch 8, **dadurch gekennzeichnet, daß** das Stoßorgan unbeweglich ist und die Leckklappe (C4) mit dem Kolben fest verbunden ist.

10. Vorrichtung gemäß einem der vorangehenden Ansprüche, **dadurch gekennzeichnet, daß** sie außerdem einen Steuerkreis und eine Steuerelektronik und ein Elektroventil zum Verbinden der Hauptbremsleitung mit der Atmosphäre und wenigstens einen Sensor aufweist, wobei das Elektroventil normalerweise geschlossen ist, wobei der wenigstens eine Sensor ein Drucksensor der Hauptbremsleitung ist, wobei der elektronische Schaltkreis Mittel aufweist, die das Öffnen des Elektroventils unter vorgegebenen Bedingungen in Abhängigkeit von Messungen des Sensors oder der Sensoren bewirkt.

## Claims

1. A brake assist device for rolling railway equipment, the braking of said equipment being controlled by down variations of compressed air pressure in a general duct, the device connected to said general duct including detector and effector means as well as fluid circuits between said detector and effector means, said detector and effector means analysing the variations of pressure in said duct and causing a venting of said general duct during a braking, the detector and effector means of the device being pneumo-mechanical, the detector and effector means and the fluid circuits of the device being configured so as not to cause the venting of the general duct only for a variation of pressure in time higher than a determined threshold, said venting of the general duct lasting only for a predetermined duration,
**characterized in that** the detector and effector means and the fluid circuits of the device are at least one control piston, whose first face is in a reaction chamber (CR) and second face in a control chamber (CC), the control piston being able to move under the effect of a difference of pressure between the reaction chamber and the control chamber, an elastic return means allowing to bring said piston back to a rest position in the absence of a pressure difference,
the control chamber (CC) being directly connected to the general duct and the reaction chamber (CR) being directly connected to a delay chamber (CT), a bypass fluid circuit bypassing the general duct being established with the delay chamber, said bypass fluid circuit including on its path at least, on the one hand, a bypass valve (C1 or C1' or C1") able to be open or closed as a function of a difference of pressure between its two faces, and on the other hand, a calibrated bypass opening (01), said bypass opening (O1) allowing only a reduced passage of air, said bypass fluid circuit being configured to allow the balance of the pressures between the reaction chamber (CR) and the control chamber (CC) for a variation of pressure in time in the general duct lower than a determined threshold, preferably lower than 0.3 bar/min.

2. The device according to claim 1, **characterized in that** the detector and effector means and the fluid circuits of the device are at least:
- a control piston, whose first face is in a reaction chamber (CR) and second face in a control chamber (CC), the control piston being able to move under the effect of a difference of pressure between the reaction chamber and the control chamber, an elastic return means allowing to bring said piston back to a rest position in the absence of a pressure difference,
the control piston allowing to operate in opening and closure a venting valve (C2), an isolation valve (C3) and a leak valve (C4),
- a delay chamber (CT) allowing to store compressed air and connected to the leak valve (C4), the leak valve allowing to vent or not the delay chamber (CT) through a calibrated leak opening (03), said opening allowing only a reduced passage of the air,
- a bypass valve (C1) able to be open or closed as a function of a difference of pressure between its two faces and including in parallel a calibrated bypass opening (01), said opening allowing only a reduced passage of the air arriving to said bypass valve,
and **in that** the control chamber (CC) is directly connected to the general duct and the reaction chamber (CR) is directly connected to the delay chamber, a bypass fluid circuit bypassing the general duct being established with the delay chamber, said bypass fluid circuit including on its path the bypass valve (C1) with its calibrated bypass opening (O1) in parallel and the isolation valve (C3), the venting valve (C2) being arranged in engagement with said bypass fluid circuit between the bypass valve (C1) and the isolation valve (C3),
and **in that**, in standby mode, a nominal pressure of compressed air having been established in the general duct for a time sufficient to place said device in standby mode, the piston being in its rest position, the delay chamber (CT) and the reaction chamber (CR) being at a pressure substantially equal to that of the general duct, the bypass valve (C1) is closed, the venting valve (C2) is closed, the isolation valve (C3) is open and the leak valve (C4) is closed,
and the device includes such means that when, at a time t0, the pressure in the general duct decreases in such a manner that a difference of pressure is created between the reaction chamber (CR) and the control chamber (CC) due to the fact that the small size of the bypass opening (O1) of the bypass valve (C1) does not allow the balance of the pressures between the two chambers, the control piston moves and causes, in a first time t1, the closure of the isolation valve (C3) then, in a second time t2, the opening of the venting valve (C2) then, in a third time t3, the opening of the leak valve (C4) which causes a progressive draining of the delay chamber (CT) and of the reaction chamber (CR), the balance of the pressures between the two reaction (CR) and control (CC) chambers after a determined time that is function of the calibrated leak opening (O3) bringing the piston back to its rest position.

3. The device according to claim 2, **characterized in that** the delay between t0 and the first time t1 is adjustable, in standby mode, with the piston in rest, the open isolation valve (C3) having an adjustable passage opening height Ho, in operation the passage opening height varying in relation with the displacements of the control piston to open and close said isolation valve (C3).

4. The device according to claim 1, **characterized in that** the detector and effector means and the fluid circuits of the device are at least :
- a control piston, whose first face is in a reaction chamber (CR) and second face in a control chamber (CC), the control piston being able to move under the effect of a difference of pressure between the reaction chamber and the control chamber, an elastic return means allowing to bring said piston back to a rest position in the absence of a pressure difference,
the control piston allowing to operate in opening and closure a venting valve (C2), an isolation valve (C3) and a leak valve (C4),
- a delay chamber (CT) allowing to store compressed air and connected to the leak valve (C4), the leak valve allowing to vent or not the delay chamber (CT) through a calibrating leak opening (03), said opening allowing only a reduced passage of the air,
- a bypass valve (C1' or C1") able to be open or closed as a function of a difference of pressure between its two faces and including in series a calibrated bypass opening (01), said opening allowing only a reduced passage of the air arriving to said bypass valve,
and **in that** the control chamber (CC) is directly connected to the general duct and the reaction chamber (CR) is directly connected to the delay chamber, a bypass fluid circuit bypassing the general duct being established with the delay chamber, said bypass fluid circuit including on its pass the bypass valve (C1' or C1") and the calibrated bypass opening (01),
the general duct is connected by a fluid circuit (A1') both to the isolation valve (C3) and to the venting valve (C2),
and **in that**, in standby mode, a nominal pressure of compressed air having been established in the general duct for a time sufficient to place said device in standby mode, the piston being in its rest position, the delay chamber (CT) and the reaction chamber (CR) being at a pressure substantially equal to that of the general duct, the bypass valve (C1' or C1") is open, the venting valve (C2) is closed, the isolation valve (C3) is closed and the leak valve (C4) is closed,
and the device includes such means that when, at a time t0, the pressure in the general duct decreases in such a manner that a difference of pressure is created between the reaction chamber (CR) and the control chamber (CC) due to the fact that the small size of the bypass opening (O1) does not allow the balance of the pressures between the two chambers, the control piston moves and causes, in a first time t1, the continuation of the closure of the isolation valve (C3) then, in a second time t2, the opening of the venting valve (C2) then, in a third time t3, the opening of the leak valve (C4) which causes a progressive draining of the delay chamber (CT) and of the reaction chamber (CR), the balance of the pressures between the two reaction (CR) and control (CC) chambers after a determined time that is function of the calibrated leak opening (O3) bringing the piston back to its rest position.

5. The device according to any one of claims 1 to 4, **characterized in that** the bypass valve (C1 or C1' or C1") able to be open or closed as a function of a difference of pressure between its two faces includes a calibrated spring (R1 or R1' or R1") so as to allow the displacement of the valve only for a variation of pressure in time higher than 0.3 bar/min.

6. The device according to any one of claims 2 to 5, **characterized in that** the fluid circuit allowing the venting of the general duct via the venting valve (C2) includes a throttling orifice (O2) intended to reduce the flow rate in said circuit during the direct link between free air and the general duct.

7. The device according to any one of claims 2 to 6, **characterized in that** the opening of the venting valve (C2) can occur only when the isolation valve (C3) is closed, the venting valve (C2) and the isolation valve (C3) being operated by a common operating member, itself operated by the piston, the closure of the isolation valve (C3) forming a stop for the common operating member.

8. The device according to any one of claims 2 to 7, **characterized in that** the delay between the beginning of the second time t2 of opening of the venting valve (C2) and the beginning of the third time t3 of opening of the leak valve (C4) is adjustable, in standby mode, with the piston in rest, the leak valve (C4) being arranged at an adjustable distance Co from a thrust member, which is intended, when pressed on the leak valve (C4), to open said leak valve, in operation the distance between the leak valve (C4) and the thrust member varying in relation with the displacements of the control piston to open or close said leak valve (C4).

9. The device according to claim 8, **characterized in that** the thrust member is standstill and the leak valve (C4) is integral with the piston.

10. The device according to any one of the preceding claims, **characterized in that** it further includes an electronic control and command circuit and an electrovalve for venting the general duct and at least one sensor, said electrovalve being normally closed, said at least one sensor being a sensor for the pressure of the general duct, said electronic circuit including means causing the opening of the electrovalve in determined conditions that are function of measurements of the sensor(s).
